# EUROPÄISCHE PATENTSCHRIFT

(11) **EP 1 963 072 B1**
(45) Veröffentlichungstag und Bekanntmachung des Hinweises auf die Patenterteilung: **13.04.2011**
(21) Anmeldenummer: 06762146.6
(22) Anmeldetag: 23.06.2006
(51) Int. Cl.: B29C 45/16, B29C 45/14, B25G 1/10

(54) **VERFAHREN ZUR HERSTELLUNG EINES GRIFFES**
METHOD FOR PRODUCING A HANDLE
PROCEDE DE PRODUCTION D'UN MANCHE

(30) Priorität: 23.12.2005 WO PCT/EP2005/014003; 29.12.2005 DE 102005063035; 18.01.2006 DE 102006002594; 03.03.2006 DE 102006010397; 16.03.2006 DE 102006012576; 10.05.2006 DE 102006022019
(43) Veröffentlichungstag der Anmeldung: 03.09.2008
(73) Patentinhaber: Felo-Werkzeugfabrik Holland-Letz GmbH, 35279 Neustadt (DE)
(72) Erfinder: HOLLAND-LETZ, Horst, 35279 Neustadt/Hessen (DE); HOLLAND-LETZ, Martin, 35279 Neustadt/Hessen (DE)
(74) Vertreter: Rehberg Hüppe + Partner
(86) Internationale Anmeldenummer: PCT/EP2006/006045
(87) Internationale Veröffentlichungsnummer: WO 2007/079787

(56) Entgegenhaltungen:
- EP-A- 1 136 219
- EP-A- 1 314 519
- WO-A-00/64306
- WO-A-01/74562
- DE-U1- 9 202 550
- DE-U1- 20 310 882
- DE-U1- 29 705 522
- FR-A- 2 754 204
- US-A1- 2003 172 498

## Beschreibung

### TECHNISCHES GEBIET DER ERFINDUNG

Die Erfindung betrifft ein Verfahren zur Herstellung eines Griffes für ein Werkzeug, mit dem insbesondere ein Torsionsmoment übertragen werden soll. Beispielsweise betrifft die Erfindung ein Verfahren zur Herstellung eines Griffes für einen Schraubendreher.

### STAND DER TECHNIK

Gestaltungs- und Bewertungskriterien für Griffe für Werkzeuge sind insbesondere
- die Herstellungskosten des Griffes,
- das Gewicht des Griffes,
- das Anpassungsvermögen des Griffes an eine Hand und u. U. unterschiedliche Handgrößen und Kräfte unterschiedlicher Benutzer des Griffes und/oder
- das Übertragungsvermögen für Kräfte und Momente, insbesondere Torsionsmomente für ein ein Torsionsmoment übertragendes Werkzeug wie ein Schraubendreher.

Aus dem Stand der Technik ist eine Vielzahl von Ausgestaltungsformen für Griffe für Werkzeuge und für deren Herstellungsverfahren bekannt:

### Griffe insbesondere für Schraubendreher

US-PS 2,871,899 betrifft eine erste Weiterentwicklung eines Griffs für ein Werkzeug wie einen Schraubendreher aus Hartkunststoff mit dem Ziel einer Verbesserung der Haptik des Griffes. Demgemäß wird auf einen Griffkern ein vorgefertigter Griffmantel aus weichem Kunststoff aufgezogen. Griffkern und Griffmantel sind zur Übertragung eines Torsionsmoments in Umfangsrichtung formschlüssig über Profilierungen miteinander verbunden. Der Einsatz des weichen Kunststoffs verbessert die Griffigkeit des Griffs. Bei einer praktischen Erprobung des bekannten Griffs hat sich jedoch gezeigt, dass der weiche Griffmantel bei schweren Beanspruchungen von dem harten Griffkern abhebt und Falten bilden kann. Dieses "Walken" genannte Abheben des Griffmantels von dem Griffkern führt insbesondere bei Dauerbenutzung des bekannten Griffs zu einer schmerzhaften Blasenbildung im Bereich der Handfläche des Benutzers und zu einer Entzündungen verursachenden überhöhten Belastung der Handknochen.

Zur Vermeidung der vorgenannten Nachteile ist im Folgenden vorgeschlagen worden, den Griffkern stoffschlüssig mit dem Griffmantel zu verbinden, wobei der weiche Kunststoff
- hierbei lediglich in Umfangsrichtung verteilte Teilbereiche des Griffmantels bildet oder
- in Umfangsrichtung geschlossen den Griffkern umgibt,
vgl. insbesondere DE 92 02 550 U1, DE 43 04 965 A1, DE 295 15 833 U1, DE 195 39 200 A1, DE 295 17 276 U1, DE 299 00 746 U1, DE 299 04 082 U1.

Bei derartigen Griffen aus zwei Kunststoff-Komponenten ist in einem Griffkern aus Hartkunststoff, dem ersten Griffbereich, das Werkzeug verankert. Ein derartiger Griffkern wird anschließend mit einem Griffmantel aus weichem Kunststoff umspritzt, vgl. bspw. EP 0 627 974 B1, der auch als zweiter Griffbereich bezeichnet wird. Der Griffmantel aus weichem Kunststoff hat eine gewisse Elastizität und vermittelt ein angenehmeres Greifgefühl als ein Griff, der nur aus Hartkunststoff hergestellt ist. Der weiche Kunststoff hat außerdem u. U. einen höheren Reibungskoeffizienten als Hartkunststoff. Deshalb können mit einem derartigen "2-Komponenten-Griff' u. U. höhere Torsionsmomente übertragen werden als mit einem Griff gleicher Größe aus Hartkunststoff. Dies ist von Bedeutung bei Griffen für Schraubendreher, Schraubzwingen, etc.

US 2,871,899 offenbart einen Griff zur Übertragung eines Torsionsmoments mit einem Griffkern, in dessen Längsbohrung reibschlüssig ein Schaft des Werkzeugs einpressbar ist. Der Griffkern besitzt eine zylinderförmige Mantelfläche, auf die eine Hülse mit einem ungefähr gleichen inneren Durchmesser aufgeschoben werden kann und dort reibschlüssig gehalten ist. Das Material der Hülse ist weicher und stärker dämpfend als das Material des Griffkerns. Hierzu findet beispielsweise ein dämpfendes, gummiähnliches Material mit einer Härte von zwischen 40 und 90 Shore A Einsatz, insbesondere ein Neopren-Gummi mit einer Härte zwischen 55 und 70 Shore A und einer Zugfestigkeit zwischen 1500 und 2000 Pfund/Inch² mit einer Dehnung von ungefähr 350 %. Abweichend von einer reibschlüssigen Verbindung zwischen Hülse und Griffkern kann zusätzlich ein Kleber eingesetzt werden oder ein elastischer Formschluss in Längsrichtung eingesetzt werden. Die Hülse kann ein Spritzguss-Bauelement sein. Weiterhin können zur Erzielung eines Formschlusses in Umfangsrichtung die Außenfläche des Griffkerns und die Innenfläche der Hülse mit in Längsrichtung verlaufenden Nuten, Vorsprüngen oder Zähnen ausgestattet sein.

DE 694 21 765 T2 (EP 0 635 337 B1) geht aus von einem Stand der Technik, bei dem auf dem Schaft eines Schraubendrehers aufeinander folgende Schichten aus Kunststoffmaterialien angeformt werden. Eine zentrale Schicht, in welcher der Schaft des Schraubendrehers eingebettet ist, wird als erstes geformt, und die Schicht, welche die Peripherie des Griffs begrenzt, wird auf diese zentrale Schicht oder auf Zwischenschichten aufgeformt. Für derartige Formvorgänge werden Spritzpressen verwendet mit mehreren Spritzköpfen, üblicherweise mit zwei oder drei derartigen Köpfen. Hiervon ausgehend schlägt die Druckschrift vor, einen Schaft eines Schraubendrehers in einen Kunststoffgriff einzubetten. Ein vorderer Bereich der Mantelfläche des Griffs ist von einer Kunststoffhülse gebildet. Die Kunststoffhülse ist mit zwei koaxial ineinander liegenden Teilen mit ringförmigen Querschnitten gebildet, wobei zunächst das innenliegende Teil mit einem Spritzgießverfahren hergestellt wird und auf dieses Teil das andere, die Mantelfläche bildende Teil mit einem Spritzgießverfahren aufgeformt wird. Zur formschlüssigen Verbindung der beiden Teile in der Kunststoffhülse besitzen die Teile komplementäre Vorsprünge und Ausnehmungen. Die Hülse wird mit einer herkömmlichen Presse mit zwei Spritzköpfen hergestellt. In einem darauf folgenden Verfahrensschritt wird in einer derartigen Hülse unter Ausbildung eines radialen Zwischenraums ein Schaft angeordnet. In eine geeignete Form wird dann ein Kunststoffmaterial derart eingespritzt, dass dieses den Zwischenraum im Inneren der Hülse, einen balligen Endbereich des Griffs und einen endseitigen Mantelbereich radial außenliegend von einem Endbereich der Hülse ausfüllt. Das innere Teil der Hülse ist mit einem härteren Kunststoff gebildet als das äußere Teil der Hülse. Das Ergebnis ist ein marktüblicher 2-Komponenten-Griff, der eine relativ dünne Außenschicht aus elastischem Kunststoff und einen Griffkern aus Hartkunststoff aufweist, aber sich nicht unter Einwirkung einer Handkraft verformt.

EP 1 314 5.19 A1 betrifft ebenfalls Griffe für Schraubendreher. Bei diesen ist der Schaft in einen Griffkern aus einem relativ harten Kunststoff eingebettet. Der Griffkern ist zumindest teilweise mit einem verformbaren Elastomermaterial ummantelt. Zur Verhinderung einer Verletzung des verformbaren Materials der Ummantelung ist die Ummantelung mit einem dünnen Überzug überzogen, der eine Schutzschicht und eine Schicht zum Zusammenhalten der elastomeren Ummantelung bildet. Alternativ zum Einsatz eines Elastomermaterials für die verformbare Ummantelung kann ein Gelmaterial Einsatz finden. Weiterhin offenbart die Druckschrift die Anordnung der verformbaren Umhüllung, hier eines Gelkissens, in einer Hülse mit einer geschlossenen Umhüllung. Eine derartige Hülse soll auf einen Schaufelstiel oder einen Hammerstiel aufgeschoben werden, um hier einen Griff zu bilden. Durch eine zumindest teilweise Verformbarkeit der Griffoberfläche soll ermöglicht werden, dass der Griff nachgibt, wenn beispielsweise ein Benutzer an einer bestimmten Stelle stärker zugreift als an einer andern. Auch wenn die Hand des Benutzers von der Standardform und Standardgröße abweicht, kann auf diese Weise ein besseres Fassen und Behandeln des Griffs durchgeführt werden. Wie groß die Nachgiebigkeit der Ummantelung ausgeführt wird, hängt von den Umständen des Einzelfalls und von der Art des Griffs bzw. der Art des Werkzeugs ab, das mit diesem Griff benutzt werden soll. Die Verformbarkeit des Griffs kann sich beispielsweise über den gesamten Bereich des Griffelements erstrecken, an dem ein Benutzer angreift. Ebenfalls möglich ist, dass die Verformbarkeit auf einen Teil der Griffoberfläche begrenzt ist, beispielsweise auf den Teil, an dem der Benutzer mit der Handinnenfläche angreift, während die Teile des Griffs, an denen der Benutzer mit den Fingerspitzen angreift, nicht verformbar ausgebildet sind. Eine solche Gestaltung der Griffoberfläche bietet sich beispielsweise bei Schraubendrehern an, bei denen bestimmte Bereiche der Griffoberfläche so ausgebildet sind, dass sie zum schnellen Drehen des Werkzeugs mit den Fingerspitzen gedacht sind. Die Verformbarkeit der Griffoberfläche soll hierbei auf eine bestimmte Tiefe unterhalb der Griffoberfläche begrenzt sein. Innen soll ein harter Griffkern vorhanden sein, der nicht nur zur Verbindung mit dem Schaft dienen kann, sondern auch einen festen Halt für die Übertragung der Bewegung von der Hand auf das Werkzeug bieten soll. Die Dicke der verformbaren Schicht ist aber zu gering, um eine Anpassung des Griffes an die Hand des Benutzers zu ermöglichen.

DE 92 02 550 U1 der Anmelderin offenbart einen 2-Komponenten-Griff für einen Schraubendreher, der einen Griffkern aus einem Hartkunststoff, beispielsweise Polypropylen, besitzt, der in einer ersten Form mit eingelegtem Schaft hergestellt wird. In einer zweiten Form wird der Griffkern mit einem weichen Kunststoff, beispielsweise einem thermoplastischen Elastomer mit einer Endhärte von 60-80 Shore A, ummantelt. Zur Herstellung eines kuppelförmigen Bereichs wird in eine Form ein zylinderförmiges Formstück in axialer Richtung eingeführt, welches stirnseitig die Form der Kuppe vorgibt, so dass die gefertigte Kuppe nahtlos in die weitere Mantelfläche des Griffmantels übergeht (s. a. DE 43 04 965 A1). Auch dieser Griff ist ein heute marktüblicher 2-Komponenten-Griff, der keine Anpassungsmöglichkeit an die Hand eines Benutzers bietet.

DE 35 25 163 C2 offenbart einen Griff für Schraubendreher, in dem zunächst ein Schaft mit einem Griffkern aus einem Hartkunststoff ummantelt ist. Eine endseitige, kalottenförmige Kuppe aus Hartkunststoff kann separat geformt und nachträglich mit dem Griffkern verbunden sein oder an den Griffkern angeformt werden. Eine Mehrteiligkeit empfiehlt sich, wenn die Kuppe noch aus einem härteren Material als der Griffkern bestehen soll. Bei mehrteiliger Ausgestaltung kann ein zentraler Zapfen der Kuppe in eine formentsprechende Ausnehmung des Griffkerns eintreten. Der Griffkern besitzt ungefähr mittig eine radiale Erweiterung, im Bereich welcher der Griffkern mit dem Hartkunststoff einen Teil der Mantelfläche des Griffs bildet. In axialer Richtung vor und hinter diesem Bereich liegende Teilbereiche der Mantelfläche sind mit einer Ummantelung des Griffkerns mit einem weichen Kunststoff gebildet, wobei die Erweiterung des Griffkerns vier axiale, in Umfangsrichtung verteilte Bohrungen besitzt, über die der vordere Teilbereich und der hintere Teilbereich der Mantelfläche aus weichem Kunststoff miteinander verbunden sind.

Weitere 2- oder Mehr-Komponenten-Griffe, insbesondere für Schraubendreher, bei denen zumindest ein axialer Teilbereich oder ein Teilumfang der Mantelfläche von einem auf einen harten Griffkern aufgespritzten weichen Kunststoff gebildet ist, sind beispielsweise aus DE 195 39 200 A1, DE 295 17 276 U1, EP 0 208 942 A2, DE 92 02 550 U1 oder DE 299 04 082 U1 bekannt.

EP 0 358 883 A1 offenbart einen Griff für einen Schraubendreher, bei dem sich eine vordere Hälfte und eine hintere Hälfte von einem mittigen Bereich maximalen Durchmessers kontinuierlich ohne Ausbildung von Hinterschneidungen verjüngen. Für eine derartige Ausgestaltung kann der Griff mit zwei Formhälften in einem Spritzgussverfahren hergestellt werden mit einer Teilungsfuge, die quer zu einer Längserstreckung der Schraubendreherachse gerichtet sein kann.

US 3,189,069 offenbart einen Schraubendreher mit einem reibschlüssig auswechselbar in einem Griffkern gehaltenen Schaft. Der Griffkern besitzt im Bereich seiner Mantelfläche in axialer Richtung verlaufende Rippen und Nuten. Weiterhin besitzt der Griffkern eine Umfangsnut. Auf den Griffkern ist in axialer Richtung ein Griffmantel aufgeschoben, wobei nach innen orientierte Fortsätze des Griffmantels in Umfangsrichtung formschlüssig in die Nuten des Griffkerns eingreifen. Der Griffmantel schnappt mit einem weiteren Fortsatz in die Umfangsnut ein, wodurch der Griffmantel gegenüber dem Griffkern gesichert ist. Neben dem erwähnten Formschluss liegen Teilsegmente des Griffmantels unter Ausbildung einer radialen Anpresskraft an dem Griffkern an, so dass ein Reibschluss gebildet ist. Für das Material des Griffmantels wird ein weicheres Material gewählt als für den Griffkern, beispielsweise Gummi.

Aus den Druckschriften WO 00/43166 und EP 1 163 088 B1 sind Griffe bekannt, bei denen durch eine asymmetrische Formgestaltung die ergonomischen Eigenschaften im Vergleich zu marktüblichen Griffen verbessert sein sollen. Nachteilig bei diesen bekannten Griffen ist, dass der Griffmantel aus weichem Kunststoff nur eine geringe Dicke besitzt und damit nur in einem geringen Maß nachgiebig ist. Hinsichtlich der Herstellung sind die Griffe in bestimmten Größen und Formen standardisiert, während die Hände der Benutzer verschiedene Größen und Maßverhältnisse haben. Deshalb ist insbesondere für unterschiedliche Hände von unterschiedlichen Benutzern eine optimale Ergonomie für derartige bekannte Griffe nicht gewährleistet. Bei Griffen für Schraubendreher kommt hinzu, dass bei einem Schrauben die Hand des Benutzers, die den Griff dreht, in Umfangsrichtung ihre Koppelstellung mit dem Griff laufend verändert. Der Griff kann deshalb nicht in einer optimalen ergonomischen Grundform ausgebildet werden, wie das bei den asymmetrischen Griffen gemäß WO 00/43166 und EP 1 163 088 B1 der Fall ist, bei denen die Hand im Gebrauch im Wesentlichen eine einzige Koppelstellung zu dem Griff haben kann.

### Griffe für Zangen

DE 20 2004 019 156 U1 beschreibt eine Zange mit zwei Zangenschenkeln mit zwei gleich ausgebildeten Griffen. Jeder Griff weist im Bereich der Mantelfläche drei Bereiche auf, die hintereinander liegend in Richtung des Endbereichs des Griffs zunehmende Härten besitzen. Der härteste Bereich bildet einen Griffkörper mit einer endseitigen Mantelfläche, auf den die anderen Teilbereiche zur Bildung der weiteren Bereiche der Mantelfläche aufgebracht sind. Während für den ersten Bereich ein hartes Material wie ein Hartplastik eingesetzt wird, welches in einem Spritzgussverfahren hergestellt sein kann, besteht der zweite Bereich aus einem weicheren Kunststoff. Der dritte Bereich ist mit einem Gelkissen ausgebildet. Der Schaft des Werkzeugs ist in den ersten Bereich eingebettet.

EP 0 538 632 A1 betrifft ebenfalls einen Griff für eine Zange, bei der ein Schaft eines Zangenschenkels über den außenliegenden Teilumfang mit einem weichen Kunststoff ummantelt ist, beispielsweise Polyvinylchlorid oder Polyethylen mit einer Härte zwischen 65-82 Shore A, insbesondere 66-70 Shore A, während der innenliegende Teilumfang mit einem formstabilen harten Kunststoff, insbesondere Zelluloseacetat oder Acrylnitril-Butadien-Styrol-Copolymere, ummantelt ist, beispielsweise mit einer Härte im Bereich von 85-92 Shore A, insbesondere 86-90 Shore A. Weiterhin ist es möglich, dass im Bereich des inneren Umfangs Einsätze vorgesehen sind, die ebenfalls entsprechend dem äußeren Umfangsbereich aus einem weichen Kunststoff bestehen, so dass in Umfangsrichtung ein harter Kunststoff und ein weicherer Kunststoff abwechselnd angeordnet sind.

Bei allen 2-Komponenten-Griffen, insbesondere für Schraubendreher, Kellen, Zangen, Feilen, Sägen usw. ist nach dem Stand der Technik die Außenschicht weicher als der Griffkern und verhältnismäßig dünn.

### Griffe für Schlagwerkzeuge

US 6,370,986 B1 geht von dem Stand der Technik aus, dass Hammer üblicherweise einen Griffkern aus einem harten Material wie einem Metall, einem Verbundmaterial oder einem synthetischen Material besitzen, der zur Bildung eines Griffs mit einer gummiartigen, verhältnismäßig harten Hülse umgeben ist. Offenbart ist ein manuell betätigtes Stoß- oder Schlagwerkzeug. Ein Griff besitzt eine innere Schicht sowie eine äußere Schicht. Die innere Schicht und die äußere Schicht bestehen aus gleichen Materialen, nämlich Polyvinylchlorid, Polypropylen oder ein thermoplastisches Elastomermaterial. Die äußere Schicht ist härter als die innere Schicht, aber kann ebenfalls flexibel oder dämpfend sein. Die unterschiedlichen Steifigkeiten der inneren Schicht und der äußeren Schicht werden nicht durch die verwendeten Materialien erzeugt, sondern dadurch, dass die innere Schicht geschäumt ist, während die äußere Schicht nicht geschäumt ist. Die Materialien für die innere und äußere Schicht sind geeignet gewählt, so dass diese chemisch kompatibel sind und ein Anhaften oder ein Fügen der Schichten möglich ist. Die innere Schicht dient einer Dämpfung eines auf einen Kopf des Schlagwerkzeugs aufgebrachten Stoßes oder Schlags bei dessen Kraftfluss zu der Hand eines Benutzers des Stoß- oder Schlagwerkzeugs. Weiterhin beschreibt die Druckschrift die für Stoß- und Schlagwerkzeuge spezifischen Probleme, die abweichend zu solchen von Torsionsmomentübertragungswerkzeugen sind. Das Schlagwerkzeug besitzt eine Seele, beispielsweise aus Metall, die unmittelbar und ohne Zwischenschaltung einer Zwischenschicht mit der geschäumten inneren Schicht verbunden ist, so dass mit Seele, innerer Schicht und äußerer Schicht ein dreischichtiger Aufbau gewählt ist. Die Seele ist im Querschnitt rechteckförmig ausgebildet mit Verdickungen im Endbereich, so dass vereinfacht gesprochen ein Doppel-T-Profil oder I - Profil gebildet ist. In dem Griff erstreckt sich die Seele teilweise lediglich mit den Verdickungen, also den Querschenkeln des Doppel-T-Profils, während der Längsschenkel des Doppel-T-Profils hier unterbrochen oder mit Zwischenräumen ausgebildet ist. In derartige Zwischenräume kann das Material der inneren Schicht eintreten. Die auskragenden Endbereiche des Doppel-T-Profils bilden Vibrationen aufnehmende Elemente, Die äußere Schicht besitzt radial nach innen orientierte, in Umfangsrichtung verteilte und sich in Längsrichtung des Griffs erstreckende Rippen, die in entsprechende Nuten des geschäumten Materials der inneren Schicht eintreten. Diese Rippen dienen einer Versteifung des Griffs und einer Steuerung einer Kompression der inneren Schicht gegen die Seele. Weiterhin besitzt die äußere Schicht sich über einen Teilumfang erstreckende Rippen, die die Funktion der in Längsrichtung orientierten Rippen weiter unterstützen sollen. Die Fertigung des Griffbereiches erfolgt in einem zweistufigen Spritzgussverfahren ("two shot", "double shot"-Spritzgussverfahren): Im ersten Verfahrensschritt wird die Seele in eine erste Form eingelegt und mit Polyvinylchlorid ausgeschäumt. In der Seele können Ausnehmungen angeordnet sein, in die in dem Spritzgussverfahren das geschäumte Material eintritt, wodurch die Wirkverbindung zwischen Seele und innerer Schicht verbessert werden kann. Anschließend wird die Seele mit der Ummantelung durch die erste Schicht in eine zweite Form eingelegt, in der dann in einem zweiten Spritzguss-Verfahrensschritt härteres Polyvinylchlorid eingespritzt wird. Für die innere Schicht ist eine Härte Shore A zwischen 45 und 65 Shore A, vorzugsweise 55 Shore A, angegeben, während die Härte der äußeren Schicht zwischen 66 und 76 Shore A, insbesondere 71 Shore A, beträgt. Vorteilhaft ist bei dem gewählten zweistufigen Spritzgussverfahren, dass während der Herstellung die Dimensionen der inneren Schicht und die Dicke der Wandung der äußeren Schicht präzise vorgegeben werden können. Eine Möglichkeit einer Fertigung des Griffs mit abweichenden Fertigungsmethoden, insbesondere ein Einsatz eines Monosandwich-Spritzgussverfahrens, ist ebenfalls pauschal angesprochen. Fraglich ist, ob das zweistufige Spritzgießverfahren zu einem Griff führt, bei dem die innere Schicht noch nachgiebig ist. Beim Aufspritzen der äußeren Schicht wirkt nämlich ein hydraulischer Druck auf die Oberfläche der inneren Schicht, der bei einem solchen Verfahren bei 600 bis 800 bar liegt. Unter einem solchen Druck wird eine geschäumte Schicht so zusammengepresst, dass sie nicht mehr porös ist. Dann ist sie nur noch so weit nachgiebig, wie es die Härte des verwendeten Kunststoffes zulässt. Eine Härte von 45 bis 65 Shore A ist aber schon zu hoch, um eine ausreichende Nachgiebigkeit zu bieten.

Aus US 3,770,033 ist ein Griff für einen Hammer bekannt. Der Griff ist als Integralschaum - Teil hergestellt. Bei einem derartigen Griff wird ein harter Kern, Stiel oder eine Seele des Hammers von dem aus Struktur-Schaum bestehenden eigentlichen Griffkörper umschlossen. Der Griffkörper wird im Querschnitt aus einer an der Seele anliegenden Schicht und einer äußeren Schicht mit relativ hoher Dichte und einer dazwischen liegenden Schicht mit geringer Dicke gebildet. Dieser Aufbau des Griffs ermöglicht eine elastische Querschnitts-Verformung des Griffs und dämpft Stöße beim Arbeiten mit dem Hammer. Die dünnen Schichten mit unterschiedlicher Dichte entstehen unter Einwirkung des Druckes, der im Inneren der Masse entsteht, wenn ein Treibmittel zur Porenbildung vergast und die Randschicht der Masse an die Wand der Formkavität gepresst und hier verdichtet wird. Zur Übertragung höherer Torsionsmomente, wie beispielsweise bei Schraubendrehern, ist ein derartiger Griff allerdings ungeeignet, da der Kern, auch in einer unrunde Querschnittsform, einen zu kleinen Durchmesser bzw. einen zu kleinen Hebelarm zur Erzeugung eines Torsionsmoments besitzt und die poröse Innenschicht alleine keine ausreichende Torsionssteifigkeit hat.

US 3,770,033 betrifft einen Griff eines Stoß- oder Schlagwerkzeugs wie einen Hammer, einen Vorschlaghammer, eine Hacke, eine Axt o. ä.. Ein Körper eines Griffs ist mit einem steifen Plastikschaum gebildet mit einer Dichte im Bereich von 35-45 PfundlFuß³ und mit einem zentralen, verstärkten Griffkern. Der Körper des Griffs kann aus Plastikmaterial gebildet sein, beispielsweise Polyethylen, Polystyren, Polyurethan, Polypropylen. Plastikschaum wird in eine gewünschte Form um den Griffkern gespritzt, wobei der Körper des fertiggestellten Griffs durch eine Art Presspassung mit dem Griffkern ausbilden soll. Das formgebende Verfahren schafft inhärent Schichten, die eine Innenschicht und eine Außenschicht des Körpers bilden mit einer größeren Dichte als die Dichte von Zwischenbereichen zwischen den vorgenannten Schichten mit niedriger Dichte. Die Innen- und Außenschichten haben eine Dicke von gewöhnlicherweise zwischen 0,04 bis 0,05 Inch (1,016 bis 1,27 mm).

DE 101 13 368 A1 offenbart einen Griff für ein Schlagwerkzeug, bei dem zur Stoßabsorption der Schaft in einem Griff aus einem elastischen Material aufgenommen ist. Der Griff besitzt auf der Ober- und Unterseite in axialer Richtung orientierte, durchgehende Ausnehmungen, in die weitere, über die Mantelfläche des Griffs verteilte radial orientierte Ausnehmungen münden.

DE 197 32 421 C2 betrifft ebenfalls ein Schlagwerkzeug, bei dem sich von einem Endstück oberhalb und unterhalb des Schafts zwei Hohlfinger in axialer Richtung erstrecken, die von einer elastischen Griffhülle ummantelt sind. Über die Finger soll eine Stoßabsorption erreicht werden.

US 2003/0172498 A1 offenbart einen Griff, der Vibrationen für einen Einsatz bei einem Schlag- oder Stoßwerkzeug dämpfen soll. Auf einer Ober- sowie Unterseite des Griffs ist jeweils ein Kissen angeordnet, welches aus einer elastomeren Ummantelung und einem hierin eingeschlossenen Schaum besteht. Bei der elastomeren Ummantelung kann es sich um ein thermisches Plastik-Olefin, thermisches plastisches Gummi, thermische plastische Polyurethane, Polyvinylchlorid, steyrenische Block-Polymere und eine Kombination der vorgenannten Materialien handeln. Das Material wird in einem Spritzgussverfahren verarbeitet. Zur Herstellung der Kissen wird in einer Spritzgussmaschine das Elastomermaterial mit einem schäumenden Mittel gemischt. Die geschmolzene Mixtur wird dann in eine Form eingespritzt. Die kältere Temperatur der Form stellt während des Einspritzens eine Wärmesenke dar, so dass die Temperatur des Materials im Kontaktbereich mit der Form schneller abkühlt als im Inneren. Somit entsteht eine Art Haut aus nicht geschäumtem Elastomermaterial. Im Inneren bleibt die höhere Temperatur des Gemisches erhalten und führt zu einer Schaumbildung im Inneren, so dass der Schaum den innerhalb der Haut verfügbaren Raum ausfüllt. Wird der Griff aus der Form entfernt, kann bei geeigneter Temperaturgestaltung eine weitere Expansion des Schaums im Inneren der Haut zu einer Dehnung der Haut führen, was eine Verringerung der Wandstärke der nicht geschäumten Schicht zur Folge haben kann. Mit einer endgültigen Abkühlung härtet sowohl die Haut als auch der Schaum aus. Bei dem schäumenden Mittel kann es sich um feste Partikel, eine Flüssigkeit oder ein Gas handeln. Insbesondere ist das schaumbildende Mittel endotherm ausgebildet. Im Verhältnis zwischen dem Elastomermaterial und dem schaumbildenden Mittel findet eine Konzentration von 1-10 % Einsatz.

Weitere Griffe für Schlag- und Stoßwerkzeuge sind in US 5,490,437 und US 6,619,408 B1 beschrieben.

DE 299 04 043 U1 betrifft ein Einsatzgebiet, welches Stoß- und Schlagwerkzeugen verwandt ist, nämlich eine Maschine wie beispielsweise eine Schlagbohrmaschine, ein Schleifgerät o. ä. Eine Griffschale, die beispielsweise aus Kunststoff oder Metall gebildet ist, ist mit einer Oberflächenbeschichtung aus Polyurethan versehen, die eine unterschiedliche Zellstrukturierung aufweisen kann.

### Griffe für sonstige Einsatzzwecke

US 4,023,606 offenbart eine Anordnung eines Blattes eines Eispickels in einer rohrförmigen Hülse. Ein geschäumtes Kunststoffmaterial ist zwischen die Hülse und den Schaft eingespritzt.

US 4,338,270 betrifft einen Griff für einen Golfschläger, der reibschlüssig auf den Schaft aufbringbar ist. Der Griff ist mit einer Hülse aus einem flexiblen Schaum gebildet, der radial außenliegend eine Oberflächenhaut ausbildet. Die nicht zellförmige oder poröse Außenhaut besitzt eine Dicke von ungefähr 0,005 Inch bis 0,020 Inch (0,127 bis 0,508 mm). Der Schaumbereich weist eine Härte von zwischen 55 und 65 Shore A auf. Die äußere Haut dient als Schutz gegen Abrasion oder Erosion des Griffs im Gebrauch. In einem Endbereich besitzt der Griff eine Kappe, die eine innenliegende sowie eine außenliegende Hülse besitzt, wobei die vorgenannten Hülsen über radial orientierte Rippen miteinander verbunden sind. Während die außenliegende Hülse die Mantelfläche im Endbereich bildet, dient die innenliegende Hülse einer Abstützung der Kappe an dem Schaft. Für die Kappe kommt ein Material mit einer Härte zwischen 70 und 90 Shore A zum Einsatz. Mögliche für den den Griff bildenden Schaum einsetzbare Materialien sind Polyurethan in Verbindung mit Polyol und Isocyanat. Als Treibmittel findet vorzugsweise Trichloromonofluoroethan Einsatz.

US 5,355,552 betrifft einen luftgefederten Griff für einen Tennisschläger, einen Hammer, ein Fahrrad o. ä. zur Absorption von Stößen. Hierzu besitzt der Griff Hohlkammern, in denen Luft, ggf. unter einem erhöhten Druck, angeordnet ist.

US 4,321,040 offenbart einen zweiteiligen Griff für ein medizinisches Gerät, bei dem zwischen einer flexiblen äußeren Hülse und einem Griffkern ein Verformungen ermöglichender Zwischenraum vorgesehen ist.

Weiterer Stand der Technik ist aus EP 1 136 219 A, DE 297 05 522 U1, WO 00/64306A, EP1314519 und US 2003/0172498 bekannt.

### AUFGABE DER ERFINDUNG

Der Erfindung liegt die Aufgabe zugrunde, ein Verfahren zur Herstellung eines Griffs für ein Werkzeug vorzuschlagen, mit dem bei einfacher Ausgestaltung der erforderlichen Verfahrensschritte ein Griff mit guten eingangs aufgelisteten alternativen oder kumulativen Bewertungskriterien herstellbar ist.

### LÖSUNG

Die Aufgabe der Erfindung wird erfindungsgemäß Lösung mit den Merkmalen des unabhängigen Anspruchs 1 gelöst. Weitere Ausgestaltungen der Lösungen ergeben sich entsprechend den Merkmalen der abhängigen Ansprüche 2 bis 19. Ein erfindungsgemäß hergestellter Griff ergibt sich entsprechend den Merkmalen des Anspruchs 20. Weitere Ausgestaltungen eines derartigen Griffes sind mit den Merkmalen der Ansprüche 21 bis 23 ausgestattet. Der Oberbegriff des Anspruchs 1 geht von der EP1136219 aus.

### BESCHREIBUNG DER ERFINDUNG

Während für den eingangs aufgelisteten Stand der Technik eine Herstellung eines schichtweisen Aufbaus eines Griffs für ein Werkzeug auf einem Einsatz unterschiedlicher Formkavitäten für einzelne Schichten beruht hat, insbesondere
a) eine Fertigung einer äußeren Schicht separat von einer inneren Schicht mit anschließender stoffschlüssiger oder formschlüssiger Verbindung der beiden genannten Schichten oder
b) sukzessive Fertigung der Schichten von innen nach außen durch sukzessives Einlegen in Formen mit zunehmendem Durchmesser der Formkavitäten,
(s. a. die nicht vorveröffentlichte Patentanmeldung PCT/EP2005/014003 der Anmelderin), wird für die erfindungsgemäße Lösung ein Herstellungsverfahren vorgeschlagen, mit dem zumindest zwei Schichten eines Griffs aus unterschiedlichem Material in einer einzigen Formkavität und insbesondere in einem Arbeitsgang hergestellt werden können:

Zunächst wird in eine Formkavität ein Griffkern aus Hartkunststoff eingelegt und sodann ein erstes Material eingespritzt. Bevor dieses endgültig ausgehärtet ist, wird damit begonnen, in den noch flüssigen Kernbereich des ersten Materials ein zweites Material einzuspritzen. Die Menge des ersten Materials ist derart bemessen, dass mit Beendigung des Einspritzens des ersten Materials die Formkavität nicht vollständig gefüllt ist und noch Teilvolumina der Formkavität frei bleiben. Während dieses Vorganges wird vorrangig das erste Material radial außen in Kontakt mit der Wand der Formkavität gebracht. An der Formwand wird das erste Material eine stärkere Abkühlung erfahren als im Bereich einer flüssigen Phase im Bereich des Inneren der Formkavität. Dies hat zur Folge, dass das radial außenliegende erste Material zuerst aushärtet und eine äußere Schicht bildet. Entsprechendes kann alternativ oder kumulativ radial innenliegend im Bereich der Oberfläche eines Griffkerns gelten.

Für die Herstellung eines Kontakts des ersten Materials mit der Formwandung können zwei Effekte alternativ oder kumulativ für die Erfindung ausgenutzt werden:
a) Einerseits kann bei einem Einspritzen des ersten Materials in die Form durch Positionierung und Richtungsorientierung der Einspritzkanäle zur Formkavität der Materialfluss derart ausgerichtet werden, dass das Material unmittelbar eine Wandung der Formkavität benetzt oder der Materialfluss zunächst auf den Griffkern trifft und von dort nach außen gelenkt wird.
b) Ebenfalls möglich ist, dass bei einem Einspritzen des zweiten Materials der Materialfluss durch die Einspritzbedingungen wie
   - die Einspritzrichtungen,
   - die wirkenden Drücke,
   - die Einspritzgeschwindigkeit und/oder
   - den Einspritzort
   derart gestaltet wird, dass das erste Material zumindest teilweise von dem zweiten Material nach außen und damit gegen die Formwandung verdrängt wird.

Die vorstehend erläuterte Gestaltung der Spritzgussbedingungen und -parameter hat zur Folge, dass nach einem Aushärten eine Mantelfläche des Griffes bzw. die äußere Schicht innerhalb der Form vorrangig von dem ersten Material gebildet wird. Hierbei kann eine derartige Mantelfläche bereits die spätere Mantelfläche des Griffs des Werkzeugs bilden. Ebenfalls möglich ist, dass diese Mantelfläche in einem nachfolgenden Verfahrensschritt teilweise oder vollständig mit einem anderen, weicheren oder härteren Material teilweise oder vollständig ummantelt wird.

Radial innenliegend von der mit dem ersten Material gebildeten Mantelfläche ist mit Abschluss der erfindungsgemäßen Verfahrensschritte zumindest in Teilbereichen das zweite Material angeordnet in einer inneren Schicht. Bei den erfindungsgemäßen Teilbereichen kann es sich insbesondere um Teilumfangsbereiche und/oder axiale Teilbereiche handeln.

Im Gegensatz zu der in US 6,370,986 angesprochenen Herstellung eines Hammers mit einem Mono-Sandwichverfahren, bei dem ein einziges Material in einem einzigen Verfahrensschritt in eine Form eingespritzt wird, erfolgt erfindungsgemäß die Herstellung in einer Art "Intervall-Sandwich-Spritzgussverfahren", für die nacheinander in Intervallen, insbesondere ohne zeitliche Unterbrechung, unterschiedliche Materialen eingespritzt werden.

Durch die erfindungsgemäße Ausgestaltung des Herstellungsverfahrens ist eine Herstellung eines Griffs für ein Werkzeug oder zumindest von zwei Schichten für einen derartigen Griff möglich, ohne dass ein Wechsel einer Form erforderlich ist. Die Durchführung des Verfahrens erfordert lediglich eine Steuerung der Bedingungen und Parameter für die Durchführung eines Spritzgussverfahrens mit zumindest zwei Materialien, was über eine Automatisierung zumindest einer entsprechend ausgerüsteten Spritzgießmaschine möglich ist. Andererseits hat sich gezeigt, dass durch eine Verbindung der mit dem ersten und zweiten Material gebildeten Schichten noch im zumindest teilflüssigen Zustand eine besonders zuverlässige stoffschlüssige Verbindung hergestellt werden kann.

Bei dem erfindungsgemäßen Verfahren wird der Materialfluss so gesteuert, dass sich zwei entgegen gerichtete Teilströme ergeben. Dieses kann beispielsweise durch Austritt der Materialien aus zwei gegenüberliegend angeordneten, in die Kavität mündenden Einspritzöffnungen oder -kanälen erreicht werden, wodurch sich zwei in entgegengesetzte Umfangsrichtungen aufgeteilten Volumenströmen einstellen. Alternativ oder zusätzlich ist es möglich, dass in einer Form ein oder mehrere Volumenströme eingeleitet, aufgeteilt und/oder umgelenkt werden, so dass sich einander entgegengerichtete Teilströme ergeben. Überraschend hat sich gezeigt, dass dabei neben dem Effekt der Verdrängung des ersten Materials nach außen ein weiterer Effekt eintreten kann bei geeigneter Gestaltung der Materialflüsse und Abkühlbedingungen: schieben vereinfacht gesprochen die Teilströme des zweiten Materials erstes Material auch in Umfangsrichtung vor sich her, so kommt derart geschobenes Material beim Aufeinandertreffen der beiden Teilströme "zur Ruhe". Die Oberfläche der Materialströme kühlt beim Fließen soweit ab, dass im Bereich des Aufeinandertreffens der Teilströme die abgekühlte Oberfläche vom heißen Material im Inneren des Stromes nicht mehr durchbrochen oder in flüssigen Zustand versetzt wird und aus der abgekühlten Oberflächenhaut sich radial orientierte Stege oder Rippen oder Vorsprünge aus dem ersten Material ausbilden. Diese verbinden die am Griffkern anliegende Innenschicht mit der äußeren Schicht, die die Oberfläche des Griffes bildet. Die Form und Dicke derartiger Rippen, Stege oder Vorsprünge kann durch die Gestaltung der Materialflüsse, der Spritzbedingungen und/oder der Temperaturen vorgegeben werden, ohne dass hierzu Formwandungen zur Begrenzung der Rippen, Stege oder Vorsprünge erforderlich sind. Andererseits kann automatisiert dafür Sorge getragen werden, dass die Stege, Vorsprünge oder Rippen stoffschlüssig an das erste Material der Mantelfläche angebunden sind. Über die Vorsprünge, Rippen oder Stege kann für den Griff eine Beeinflussung der mechanischen Eigenschaften wie der Federsteifigkeit, Torsionssteifigkeit und/oder Dämpfung erfolgen. Dies ist insbesondere von Vorteil für den Fall, dass über den Griff Torsionsmomente übertragen werden sollen, wie dieses bei Schraubendrehern der Fall ist.

Beispielhaft soll dieses an einer Ausführungsform erläutert werden, bei der ein erstes Material aus einem relativ härteren Kunststoff sowohl eine radial außenliegende Schicht für die Mantelfläche des Griffs als auch eine Innenschicht für eine Griffkernummantelung oder einen Griffkern bildet. Ohne Stege bedeutet eine derartige Ausgestaltung, dass zwischen den vorgenannten Schichten angeordnetes weiches zweites Material auf Scherung beansprucht wird, so dass eine Torsionssteifigkeit des Griffs abhängt von der radialen Erstreckung des zweiten Materials, der Erstreckung des zweiten Materials in Umfangsrichtung und den elastischen Eigenschaften des zweiten Materials. Durch Einsatz der Rippen, Stege oder Vorsprünge kann die Torsionssteifigkeit konstruktiv durch mehrere Effekte beeinflusst werden:
- Einerseits wird für eine Verdrehung der Mantelfläche gegenüber der Innenschicht das zweite Material zwischen in Umfangsrichtung benachbarten Stegen bei Torsionsbeanspruchung "zusammengepresst", so dass das zweite Material einer Druckbeanspruchung in Umfangsrichtung ausgesetzt ist. Damit ist zusätzlich zu einer Schersteifigkeit des zweiten Materials eine Drucksteifigkeit in den Kraftfluss zwischengeschaltet, wodurch insgesamt trotz des radial weichen zweiten Materials eine erhöhte Torsionssteifigkeit erzielt werden kann.
- Andererseits kann für den Fall, dass die Rippen, Stege oder Vorsprünge nicht in radialer Richtung durchgehend ausgebildet sind, zwischen Innenschicht und Außenschicht oder Mantelfläche das zweite Material zwischen einer Stirnfläche eines Steges, einer Rippe oder eines Vorsprungs und der Innenschicht oder der die Mantelfläche bildenden Außenschicht angeordnet sein. In diesem Bereich wird das zweite Material zwar ebenfalls auf Scherung beansprucht. Allerdings ist die radiale Erstreckung des zweiten Materials durch Einsatz der Vorsprünge, Rippen oder Stege um die Radialerstreckung der Vorsprünge, Rippen oder Stege verringert, so dass die durch die Scherbeanspruchung gebildete Torsionssteifigkeit auch verringert sein kann.

Tatsächlich erfolgt u. U. eine Überlagerung der erläuterten Beanspruchungsarten. Darüber hinaus kann über die sich ausbildenden Stege, Vorsprünge oder Rippen das radiale Steifigkeitsverhalten beeinflusst werden, so dass sich u. U. ein in Umfangsrichtung veränderliches Steifigkeitsverhalten ergibt.

Für das erste und zweite Material sind hinsichtlich der physikalischen Eigenschaften und des späteren strukturellen Aufbaus keine Grenzen gesetzt, sofern die Materialien in einem automatisierten Verfahren in eine Form einbringbar sind und miteinander in eine stoffliche Verbindung eingehen.

In einer besonderen Ausgestaltung des Griffes ist das zweite Material weicher ausgebildet als das erste Material, so dass die innere Schicht weicher ist als die äußere Schicht. Dies bedeutet, dass nach Durchführung der erfindungsgemäßen Verfahrensschritte bei dem Griff das weichere Material innenliegend von einem härteren Material angeordnet ist. Bei einer Gestaltung eines Griffs für ein Werkzeug ist, insbesondere für ein ein Torsionsmoment übertragendes Werkzeug, ein Zielkonflikt zu lösen:
- Einerseits wird die Anpassbarkeit eines Griffmantels an die Hand eines Benutzers und an Hände unterschiedlicher Größen vergrößert und damit eine Vergrößerung der Kontaktfläche zwischen Hand und Griffmantel herbeigeführt, wenn die Steifigkeit des den Griffmantel bildenden Materials verringert wird.
- Andererseits ist für eine Übertragung größerer Kräfte und Torsionsmomente über den Griff ein möglichst steifes Material für den Griffmantel und u. U. eine steife Verbindung vom Griffmantel zum Griffkern gewünscht.
- Auch ist für einen Einsatz des Griffs in rauen Einsatzbedingungen eine nicht zu weiche äußere Schicht des Griffs erwünscht, um beispielsweise Einritzungen oder Kerben des Griffmantels zu vermeiden, die neben einer Beeinträchtigung der Optik des Griffmantels negative Auswirkungen auf die Hand des Benutzers des Griffs haben.

Für die erfindungsgemäße Ausgestaltung dahingehend, dass mit dem ersten Material eine Mantelfläche des späteren Griffs gebildet ist, wendet sich diese Ausgestaltung von dem Vorurteil der Fachwelt ab, dass für auch als 2-Komponenten-Griffe bezeichnete, aus dem Stand der Technik bekannte Ausführungsformen üblicherweise eine außenliegende Schicht weich ausgebildet sein muss, um eine Nachgiebigkeit für die Hand des Benutzers bereitzustellen, während radial nach innen die Steifigkeit des Griffs zunimmt. Erfindungsgemäß kann ausgenutzt werden, dass zunächst mit dem ersten Material eine verhältnismäßig harte Mantelfläche des Griffs gegeben sein kann, die auch einen Einsatz des Griffs in rauen Einsatzbedingungen möglich macht und beispielsweise Verletzungen der Mantelfläche durch scharfkantige oder spitze Gegenstände reduziert. Andererseits kann eine derartige erste Schicht über die Wahl der Steifigkeit oder Härte der verwendeten Materialien und die Vorgabe der Schichtdicken - durch Dosierung der in die Kavität eingespritzten Volumina der zwei Materialien und/oder Temperatur der Formkavität - mit dem erfindungsgemäßen Verfahren der Griff derart gestaltet werden, dass die von dem Benutzer auf die Mantelfläche ausgeübten Kräfte dazu führen, dass sowohl die mit dem ersten Material gebildete Mantelfläche des Griffs bzw. die äußere Schicht als auch der innenliegende Teilbereich des zweiten Materials bzw. die innere Schicht verformbar sind und dennoch die bei der Benutzung auftretenden Kräfte sicher übertragen werden. Mit steigender Härte des ersten Materials erfordert dieses u. U. eine abnehmende Dicke der mit dem ersten Material gebildeten Mantelfläche. Hinsichtlich weiterer sich aus einer derartigen Gestaltung ergebender Vorteile und Gestaltungsmöglichkeiten mit einer härteren außenliegenden Mantelfläche und elastisch nachgiebigen Kammern oder weicheren Schichten im Inneren wird auf DE 10 2005 037 504.9-15 verwiesen.

Entsprechend einem weiteren Merkmal des erfindungsgemäßen Verfahrens werden die Materialflüsse derart gestaltet, dass das erste Material nicht nur radial nach außen verdrängt wird, wo dieses nach dem Aushärten zumindest Teilbereiche einer Mantelfläche des Griffs bildet. Vielmehr wird auch mindestens ein Teilvolumen des ersten Materials von dem zweiten Material radial nach innen geleitet oder verdrängt. Dort bildet dieses nach dem Aushärten zumindest einen Teilbereich einer Innenschicht um den Griffkern. Damit kann bspw. für eine Auswahl des zweiten Materials in Form eines weicheren Materials als das erste Material ein derartiges Material zumindest nach außen und innen von dem härteren ersten Material ummantelt oder "gekapselt" sein. Dies kann beispielsweise dafür genutzt werden, dass über die härtere Innenschicht eine Anbindung des Griffs an den Griffkern oder einen Schaft eines Werkzeugs, bspw. in Form einer Griffkernummantelung, erfolgen kann, so dass nicht eine unmittelbare Übertragung von Kräften und Momenten über das weiche Material zu dem Griffkern oder Schaft erfolgt, was zu Spannungsspitzen und mechanischen Beeinträchtigungen bis hin zu Abrissen im Übergangsbereich zwischen dem zweiten Material und dem Griffkern oder Schaft führen kann.

Eine besonders einfache Fertigung ist dann gegeben, wenn in der Form nicht für das erste und zweite Material unterschiedliche Eintrittsöffnungen oder Einspritzkanäle (im Folgenden Einspritzöffnungen) vorgesehen werden, sondern vielmehr ein Einspritzen des ersten und zweiten Materials über dieselbe(n) Eintrittsöffnung(en) erfolgt, Hierbei ist denkbar, dass eine Düse oder eine Einspritzleitung zum Einspritzen des ersten Materials zunächst in den Bereich der Eintrittsöffnung bewegt wird oder mit dieser verbunden wird. Hieran zeitlich anschließend wird eine weitere Düse oder Einspritzleitung für das zweite Material in den Bereich der Eintrittsöffnung gebracht oder mit dieser verbunden. Alternativ kann das erste und zweite Material über dieselbe Eintrittsöffnung, insbesondere von einer Spritzgussmaschine, in die Form eingeführt werden, die mit zwei Spritzaggregaten für die verschiedene Materialien ausgerüstet ist, wobei intern in der Spritzgussmaschine durch eine besondere Ventilmechanik in der Materialleitung über eine Maschinendüse von eine Beaufschlagung der Eintrittsöffnung mit dem ersten Material auf eine Beaufschlagung mit dem zweiten Material umgeschaltet wird.

Zur Gestaltung des Materialflusses während eines Einspritzens des zweiten Materials und/oder zur Umschaltung der Förderung des ersten Materials auf das zweite Material ist es möglich, den Aufbau der Schichten zu beeinflussen, indem die Einführung der Materialien mit einer Unterbrechung des Materialflusses erfolgt, in der sich beispielsweise die Viskosität des ersten Materials infolge einer Abkühlung ändern kann und/oder eine Beruhigung des Materialflusses erfolgt. Untersuchungen der Anmelderin haben allerdings gezeigt, dass auch ein Herstellungsverfahren zweckmäßig ist, bei dem das erste und zweite Material ohne Unterbrechung des Materialflusses eingespritzt werden, wodurch das für das Befüllen der Form erforderliche Zeitintervall verkürzt werden kann und somit ein Herstellungszyklus für den Griff verkürzt werden kann.

Ein Einspritzen des ersten und/oder zweiten Materials kann über eine oder mehrere Eintrittsöffnungen erfolgen, die in axialer Richtung und/oder in Umfangsrichtung symmetrisch oder asymmetrisch über den Griff bzw. die Form verteilt sind. Für die zuvor erläuterte Ausbildung von Stegen, Rippen oder Vorsprüngen kann beispielsweise über die Zahl der in Umfangsrichtung verteilten Eintrittsöffnungen u. U. die Zahl der sich über den Umfang verteilten Stege, Vorsprünge oder Rippen vorgegeben werden, die sich vorzugsweise außermittig oder ungefähr mittig zwischen benachbarten Eintrittsöffnungen einstellen.

Gemäß einer besonderen Ausgestaltung sind zwei in Umfangsrichtung einander gegenüberliegende Eintrittsöffnungen vorgesehen. Dies hat zum einen den Vorteil, dass der Materialfluss in Umfangsrichtung von den Eintrittsöffnungen in beide Richtungssinne ungefähr gleiche Wege zurücklegen muss. Für den Fall einer Ausbildung von Stegen, Rippen oder Vorsprüngen hat die Anordnung der Eintrittsöffnungen in einander in Umfangsrichtung gegenüberliegenden Positionen die Wirkung, dass die Stege, Vorsprünge oder Rippen ungefähr gegenüberliegend angeordnet sind, wodurch ein symmetrisches Steifigkeitsverhalten des Griffs herbeigeführt werden kann mit im Bereich der Stege sich gegenüberliegenden, verhältnismäßig steifen Teilumfangsbereichen und hierzwischen angeordneten, verhältnismäßig weichen Teilumfangsbereichen.

Gemäß einer bevorzugten Weiterbildung des erfindungsgemäßen Verfahrens wird vor dem Einspritzen des ersten Materials und des zweiten Materials ein Griffkern in die Form eingelegt, der vorzugsweise bereits den Schaft des Werkzeugs beinhaltet und mit einem Hartkunststoff gebildet ist. Neben einer automatischen Anbindung der Materialien an den Griffkern kann u. U. erfindungsgemäß bei einer derartigen Ausgestaltung ausgenutzt werden, dass sich mit einem Einspritzen des ersten Materials auch an einer Oberfläche des verhältnismäßig kalten Griffkerns eine Abkühlung des ersten Materials ergibt, so dass dieses im Bereich der Mantelfläche des Griffkerns eine Innenschicht ausbilden kann. Weiterhin kann sich mit eingelegtem Griffkern ein verbesserter Materialfluss zur Ausbildung der Stege, Rippen oder Vorsprünge ergeben. Möglich ist, dass Ströme des ersten Materials zunächst auf den Griffkern auftreffen und von dort, bereits etwas abgekühlt, radial abgelenkt werden und an dieser Seite eine schon festere Oberflächenschicht eines sich weiter auffüllenden Masseballens bilden. Von zwei Eintrittsöffnungen gespeiste Masseballen können sich an den Oberflächenschichten berühren und zu einer Wand miteinander verschmelzen, wobei diese so weit abgekühlt ist, dass sie sich auch nicht wieder in eine flüssige Phase löst und von dem später eingespritzten zweiten Material verdrängen lässt.

Für den Fall, dass eine Fertigung eines Griffs mit einem Auge beziehungsweise einem Querloch im verstärkten Ende des Griffkerns gewünscht ist, ist es vorteilhaft, wenn der Griffkern derart in die Form eingelegt wird und gegenüber den Eintrittsöffnungen orientiert wird, dass das Auge sich in Umfangsrichtung in der gleichen Ebene befindet, in dem entgegengerichtete Teilströme aufeinandertreffen. Vorzugsweise erstreckt sich das Auge in Umfangsrichtung ungefähr mittig zwischen zwei Eintrittsöffnungen. Dies bedeutet, dass sich steife Bereiche, in denen das Auge ausgebildet ist, in axialer Richtung in den Stegen, Rippen oder Vorsprüngen fortsetzen können, so dass das Auge steif mit den Stegen, einer Innenschicht, dem Griffkern und damit dem Schaft und/oder der Außenschicht verbunden ist. Beispielsweise kann in einem derartigen Fall in ein Auge eines Schraubendrehers ein weiteres Werkzeug eingesetzt werden, über das erhöhte Torsionsmomente über das Auge auf den Griff und den Schaft des Schraubendrehers aufgebracht werden können.

Ein weiter verbesserter Verbund zwischen Griffkern und den mit erstem und zweitem Material gebildeten Schichten kann erfindungsgemäß dadurch erzielt werden, dass der Griffkern abweichend zu einer zylinderförmigen oder kurvenförmigen oder gekrümmten Mantelfläche radial nach außen orientierte Rippen besitzt. Der Griffkern wird mit den Rippen derart in die Form eingelegt, dass sich die Rippen in den Teilumfangsbereich erstrecken, in dem die entgegengerichteten Teilströme aufeinandertreffen, also die Stege, Rippen oder Vorsprünge ausgebildet werden. Damit kann eine Übertragung von Kräften und eines Torsionsmoments, beispielsweise für einen Schraubendreher, von einer von einer Außenschicht gebildeten Mantelfläche über die Stege, die Rippen und den Griffkern zu einem Schaft erfolgen, so dass eine steife und zuverlässige Übertragung gewährleistet ist und mechanische Beeinträchtigungen im Kraftfluss zwischen der Mantelfläche und dem Schaft dauerhaft ausgeschlossen werden können.

Gemäß einer weiteren Ausgestaltung des Verfahrens erstreckt sich eine Teilungsebene einer verwendeten Form um 90° versetzt zu dem Teilumfangsbereich, in dem die entgegengerichteten Teilströme aufeinandertreffen. Für den Fall, dass zwei Eintrittsöffnungen für die Materialien vorhanden sind, sind diese vorzugsweise in der Teilungsebene angeordnet, so dass die Materialien ungefähr in Richtung der Teilungsebene in die Formkavität eintreten.

U. U. ist es nicht erforderlich, dass der Griff über die gesamte Längserstreckung mit zwei unterschiedlichen Schichten aus dem ersten und zweiten Material gebildet ist. Beispielsweise können die Endbereiche und Stirnseiten von einem verhältnismäßig harten Griffkern ausgebildet sein, während zwischen den gegenüberliegenden Endbereichen die beiden unterschiedlich weichen Materialien in unterschiedlichen Schichten angeordnet sind, wobei diese Schichten vorrangig von der Hand des Benutzers beaufschlagt werden. Eine Kammer zum Einspritzen eines Materials kann dann radial außenliegend von der Form begrenzt werden, während diese radial innenliegend von der Mantelfläche des Griffkerns sowie stirnseitig von den gegenüberliegenden Endbereichen begrenzt ist.

Für den Fall, dass mit dem erfindungsgemäßen Verfahren Griffe für eine Zange hergestellt werden, die jeweils einen Zangenschenkel ummanteln, ist es vorteilhaft, wenn die Eintrittsöffnungen für das erste und zweite Material auf den im zusammengebauten Zustand der Zange einander abgewandten Seiten der Zangenschenkel angeordnet sind. Hierdurch wird erreicht, dass der schichtweise Aufbau mit dem weichen Material auf den Außenseiten der Zangenschenkel angeordnet wird, die vorrangig von der Hand des Benutzers beaufschlagt werden. Die Eintrittsöffnung(en) kann/können aber auch an der Formkavität dort angeordnet sein, wo das hintere Ende des Griffes liegt. Ähnliches gilt für Griffe für Hämmer oder Kellen. Für eine Weiterbildung der Erfindung haben das erste Material und das zweite Material mit dem Aushärten eine geschlossene Struktur, so dass die Steifigkeiten der mit den Materialien gebildeten Schichten und Teilbereiche von der Materialsteifigkeit und der Erstreckung der Schichten abhängig ist. Alternativ kann das zweite Material mit dem Aushärten eine poröse Struktur ausbilden, so dass Einfluss auf die Steifigkeit über Zahl und Größe der sich ausbildenden Poren beziehungsweise die eingespritzte Menge und damit das vorgegebene Ausdehnungsvolumen genommen werden kann.

Für eine besondere Ausgestaltung kann hierbei für das erste Material und das zweite Material derselbe Kunststoff als Rohmaterial verwendet werden, wobei aber durch die Porosität in dem ersten Material und/oder zweiten Material, bspw. durch unterschiedliche Zugabe eines Treibmittels und/oder Gestaltung der Druckverhältnisse in der Formkavität die Steifigkeit beeinflusst werden kann.

Die Ausbildung einer Dicke einer Schicht erfordert besondere Maßnahmen bei der Gestaltung der Einspritzbedingungen. Bspw. ergibt sich eine dickere äußere Schicht mit einer stärkeren Kühlung der Wand der Formkavität. Die gewählte Schichtdicke hängt auch von der Größe des Griffes ab. Bei einem kleineren Griff wird sie geringer gewählt als bei einem größeren Griff. Weiterhin muss die Dicke der äußeren, ersten Schicht umso geringer sein, je höher die Härte des für sie verwendeten Kunststoffes ist, um die angestrebte Verformbarkeit zu erzielen. Da eine höhere Härte einhergeht mit größerer Widerstandfähigkeit gegen Beschädigungen und geringerer Haftung von Schmutz, wird die Verwendung von Kunststoff mit höherer Härte für die äußere Schicht angestrebt. Eine geringere Dicke ist im Intervall - Sandwichverfahren auch möglich, wobei gleichzeitig allerdings die Dicke der inneren, zweiten Schicht aus Kunststoff mit geringerer Härte zunimmt. Da deren Torsionssteifigkeit geringer ist, müssen weitere Elemente zur Erhöhung der Torsionssteifigkeit eingeführt werden. Das können radiale Rippen am Griffkern mit einem runden Querschnitt oder stegartige Verbindungen vom Griffkern zur äußeren Schicht oder allgemein ein unrunder Querschnitt des Griffkerns sein, worauf in der Beschreibung im Detail eingegangen wird. Unter diesen Voraussetzungen werden Schichtdicken von 0,5 bis 2,5 mm, maximal ca. 4 mm verwirklicht, im Wesentlichen abhängig von der angestrebten Verformbarkeit eines Griffes und dessen Größe. In axialer Richtung kann sich die Schichtdicke auch ändern.

Vorzugsweise erstrecken sich die Rippen oder Stege in zwei (oder mehr) Teilumfangsbereichen vom Griffkern aus, wodurch in Teilumfangsbereichen gezielt Anisotropien des Steifigkeitsverhaltens des Griffs erzeugt werden, insbesondere wenn die Rippen oder Stege eine größerer radiale Erstreckung in die zweite Schicht hinein haben, wobei die zwei Umfangsbereiche geeignet über den Umfang verteilt. sein können, so dass sich ein Griff in einer definierten Position gegenüber einer Hand eines Benutzers besonders gut an diese anpassen kann. Beispielsweise hat sich gezeigt, dass in dem Bereich, in dem die Finger am Griff anliegen, die Nachgiebigkeit größer, beziehungsweise die Steifigkeit geringer sein soll, als in dem Bereich, in dem die Handmulde anliegt. Die Form eines Griffes kann allgemein auch unsymmetrisch sein, sowohl im Querschnitt als auch der Längserstreckung. Die Ausbildung der Schichten wird bei einem erfindungsgemäßen unsymmetrischen Griff im Wesentlichen ähnlich verlaufen wie bei einem symmetrischen Griff. Ein Griff für Kellen oder Hämmer könnte entsprechend EP 01 915 000.2-2316 der Anmelderin unsymmetrisch ausgebildet sein. Die Nachgiebigkeit entsprechend der Erfindung bringt eine zusätzliche, erhebliche Verbesserung der ergonomischen Eigenschaften der Griffe, natürlich auch schon für symmetrische Griffe.

Für eine besondere Ausgestaltung sind die zwei Teilumfangsbereiche mit verminderter radialer Erstreckung der inneren Schicht in Umfangsrichtung oder verminderter Nachgiebigkeit beziehungsweise erhöhter Steifigkeit infolge von Rippen ungefähr einander gegenüberliegend angeordnet. Wird der Griff mit derartigen "Vorzugsrichtungen" ausgestattet, kann es vorteilhaft sein, wenn diese Vorzugsrichtungen für den Benutzer des Griffs ersichtlich gemacht werden. Dies kann beispielsweise durch eine unsymmetrische Formgebung der äußeren Mantelfläche des Griffs und/oder eine Farbgestaltung der Mantelfläche erfolgen. Ebenfalls möglich ist der Einsatz eines Auges - eine Querbohrung im Griff - in dem hinteren Endbereich des Griffs, wobei das Auge vorzugsweise seine Öffnung besitzt in Teilumfangsbereichen, in denen die minimale radiale Erstreckung der ersten Schicht bzw. die höhere Steifigkeit gegeben ist.

Der Griffkern kann, zumindest in einem Teilquerschnitt, einen
a) runden Querschnitt aufweisen mit mindestens einer sich radial nach außen erstreckenden Rippe,
b) eine in erster Näherung rechteckförmige äußere Querschnittskontur aufweisen, wobei der Teilumfangsbereich mit der kürzeren Seite der rechteckförmigen Außenkontur bis nahezu zu der Innenseite der äußeren Schicht reichen kann.
eine sternförmige äußere Querschnittskontur aufweisen, wobei beispielsweise die Spitzen des Sterns jeweils eine Art Rippe bilden mit radial nach außen abnehmender Erstreckung in Umfangsrichtung.

Durch die Ansätze am Griffkern oder dessen unrunde Profilierung wird eine größerer Kontaktfläche zwischen Griffkern und der inneren Schicht erreicht und damit eine größerer Torsionssteifigkeit, weil das Material der inneren Schicht weniger mit einer Scherkraft als mit Druck - ausgeübt von den Kontaktflächen - belastet wird, insbesondere, wenn sich Ansätze oder das Profil des Griffkerns radial weit in die innere Schicht erstreckt und somit der Hebelarm des Griffkerns verlängert.

Für einen weiteren Vorschlag der Erfindung hat die erste, äußere Schicht zumindest im Bereich einer Rippe in axialer Richtung ein im Wesentlichen gleich bleibendes elastisches Verhalten. Das kann beispielsweise dadurch erreicht werden, dass Rippen eine der axialen Außenkontur des Griffs ungefähr folgende Außenkontur aufweisen, so dass die Oberkante der Rippen einen ungefähr konstanten Abstand zur Mantelfläche des Griffs aufweisen, der dann von der ersten Schicht "überbrückt" wird.

Wird anstelle mehrerer Eintrittsöffnungen nur eine einzige Eintrittsöffnung vorgesehen, so bildet sich beispielsweise bei axial orientierter, zentraler Eintrittsöffnung kein Steg aus. Andererseits kann bei dezentraler Anordnung nur ein Steg in einer Griffhälfte ausgebildet werden, der dann vorzugsweise gegenüberliegend von der Eintrittsöffnung angeordnet ist.

Als kostengünstige, aber zuverlässige Materialien mit den gewünschten mechanischen Eigenschaften für die erste Schicht finden insbesondere ein thermoplastisches Elastomer, ein thermoplastisches Polyolefin, Polypropylen, EPDM-Kautschuk, PVC oder Styrol-Block-Copolymer Einsatz.

Ebenfalls möglich ist, dass die erste Schicht einen Füllstoff aufweist. Als mögliche Füllstoffe kommen ein Granulat wie ein Korkgranulat, Korkmehl, Holzmehl oder ein faserartiger Füllstoff wie Glasfasern in Betracht. Für den Fall, dass zumindest ein Teil derartiger Füllstoffe im Bereich der Mantelfläche des Griffs angeordnet ist, kann erreicht werden, dass die Mantelfläche des Griffs nicht vollständig glatt ist, sondern eine verbesserte Rutschfestigkeit besitzt, wodurch bspw. die durch das Werkzeug übertragbaren Torsionsmomente erhöht werden können. Korkmehl oder Holzmehl haben zum anderen den Vorteil, dass eine Feuchtigkeit der Hand aufgenommen werden kann, wie diese beim Arbeiten mit einem Werkzeug entstehen kann. Hierdurch kann ebenfalls die Rutschfestigkeit weiter verbessert werden. Ein möglicher Gewichtsanteil eines Füllstoffs am Gesamtgewicht der ersten Schicht liegt bspw. unter 50 %, insbesondere zwischen 5 % und 30 %.

In einer Ausführungsvariante wird eine Mantelfläche des Griffs mit einer Folie gebildet, die stoffschlüssig an eine innenliegende Schicht, beispielsweise die erste Schicht, angebunden ist. Eine Herstellung eines derartigen Griffs ist beispielsweise möglich unter Einlegen einer Folie in eine Form. Die Folie wird mit einem Ausfüllen der Form stoffschlüssig angebunden. Die physikalischen Eigenschaften und eine Oberfläche der Folie können so gewählt und gestaltet werden, dass sich eine verbesserte Mantelfläche des Griffs ergibt, die beispielsweise besonders öl- oder chemikalienbeständig ist oder eine rutschhemmende Oberfläche aufweist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 6**: zeigen eine Herstellung eines erfindungsgemäßen Griffs für einen Schrauben- dreher in einem Sandwichverfahren mit einem sukzessiven Einspritzen eines ersten Materials sowie eines zweiten Materials in dieselbe Form.
- **Fig. 7 bis 9**: zeigen eine Herstellung eines Griffs für eine Zange in einem Sandwich- verfahren mit einem sukzessiven Einspritzen eines ersten Materials und eines zweiten Materials in dieselbe Form.
- **Fig. 10 und 11**: zeigen eine Ausführungsform eines erfindungsgemäßen Griffes mit einem Griffkern mit rundem Grundquerschnitt und zwei auf gegenüberliegenden Umfangsseiten auskragenden Rippen in einem Längsschnitt und einem Querschnitt.
- **Fig. 12 und 13**: zeigen eine Ausführungsform eines erfindungsgemäßen Griffes mit in erster Näherung rechteckigem Griffkern in einem Längsschnitt und einem Querschnitt.
- **Fig. 14**: zeigt eine Ausführungsform eines erfindungsgemäßen Griffes mit stern- förmigem Griffkern in einem Querschnitt.
- **Fig.15 und 16**: zeigen eine Ausführungsform eines erfindungsgemäßen Griffes in einem Längsschnitt und einem Querschnitt, wobei ein Griffkern Rippen aufweist, die sich durch eine innere Schicht hindurch bis zu einer relativ dicken äußeren Schicht des Griffs erstrecken.
- **Fig. 17**: zeigt eine Ausführungsform eines erfindungsgemäßen Griffes in einem Quer- schnitt, bei dem abweichend zu dem in Fig. 15 und 16 dargestellten Ausführungsbeispiel ein Griffkern mit in erster Näherung rechteckigem Querschnitt vorgesehen ist, der sich durch eine innere Schicht bis zu einer äußeren Schicht erstreckt.
- **Fig. 18**: zeigt eine Ausführungsform eines erfindungsgemäßen Griffes in einem Längsschnitt, bei der der Griff mit zwei über eine Schnappverbindung oder mit axialem Formschluss miteinander verbundenen Bestandteilen gebildet ist.
- **Fig. 19**: zeigt eine Ausführungsform eines erfindungsgemäßen Griffes in einem Längsschnitt, bei der der Griffkern hantelförmige Endbereiche besitzt, zwischen denen sich um einen Mittenbereich des Griffkerns eine Griffkernummantelung, eine innere Schicht und eine äußere Schicht erstrecken.
- **Fig. 20**: zeigt eine Ausführungsform eines erfindungsgemäßen Griffes in einem Längsschnitt, für die sich der Griffkern nicht bis zum Ende des Griffs erstreckt, sondern in der das Ende des Griffkerns von der Griffkernummantelung, einer weicheren inneren Schicht und einer äußeren Schicht ummantelt ist.
- **Fig. 21**: zeigt eine Ausführungsform eines erfindungsgemäßen Griffes in einem Teillängsschnitt, für die der Griffkern mit in dem Endbereich unverändert durchgehendem Querschnitt ausgebildet ist.
- **Fig. 22 bis 24**: zeigen eine Ausführungsform eines erfindungsgemäßen Griffes für einen Einsatz an einer Kelle, in einer Draufsicht auf die Kelle mit Griff sowie in einem Längsschnitt und einem Querschnitt des Griffes.
- **Fig. 25 und 26**: zeigen in Verbindung mit der unteren Halbebene von Fig. 25 eine Ausführungs- form eines erfindungsgemäßen Griffes im Längsschnitt und Querschnitt, bei der Rippen eines Griffkerns eine Griffkernummantelung durchsetzen und sich in eine innere Schicht erstrecken, die von einer härteren äußeren Schicht umgeben ist.
- **Fig. 27**: zeigt in Verbindung mit der oberen Halbebene in Fig. 25 eine Ausführungsform eines erfindungsgemäßen Griffes im Querschnitt, für die Rippen des Griffkerns übergehen in Stege, die einstückig die äußere Schicht mit einer Griffkern- ummantelung verbinden und eine zwischen Außenschicht und Griffkern- ummantelung angeordnete weichere innere Schicht durchsetzen, wobei die innere Schicht in Umfangsrichtung von den Stegen unterbrochen ist.
- **Fig. 28**: zeigt eine Ausführungsform eines erfindungsgemäßen Griffes im Querschnitt für einen Zangenschenkel einer Zange, ähnlich Fig.8 und 9.
- **Fig. 29 und 30**: zeigen eine Ausführungsform eines erfindungsgemäßen Griffes für einen Hammer in einem Längsschnitt sowie einem Querschnitt.
- **Fig. 31 und 32**: zeigen eine Ausführungsform eines erfindungsgemäßen Griffes im Längs- schnitt und im Querschnitt, bei der ein Griffkern mit Rippen von einer weichen Schicht ummantelt ist, die wiederum von einer härteren, relativ dicken äußeren Schicht ummantelt ist.
- **Fig. 33**: zeigt einen Querschnitt durch eine Form für eine erfindungsgemäße Herstellung eines Griffes in einem Sandwichverfahren, wobei die Form drei über den Umfang verteilte Eintrittsöffnungen besitzt.
- **Fig. 34**: zeigt einen Längsschnitt durch eine Form für eine erfindungsgemäße Herstellung eines Griffes in einem Sandwichverfahren, wobei die Form axial versetzte Eintrittsöffnungen besitzt.

### FIGURENBESCHREIBUNG

### 1. Allgemeines

Im Folgenden bezeichnet beispielsweise eine äußere Schicht eine Schicht eines Griffes, deren äußere Mantelfläche die vom Hand eines Benutzers beaufschlagte Mantelfläche des Griffes bildet, während eine innere Schicht radial nach innen an die äußere Schicht anschließt und einen Griffkern ummantelt, der aus Hartkunststoff besteht und einen Schaft ummantelt. Selbstverständlich kann bspw. abweichend hierzu die äußere Schicht im Inneren des Griffes liegen und/oder zwischen innere Schicht und Griffkern mindestens eine Innenschicht, Griffkernummantelung oder ähnliches zwischengeordnet sein.

Die Erfindung betrifft einen Griff 1 für ein Werkzeug, in dem ein Schaft 2 eines Funktionsteils des Werkzeugs radial innenliegend aufgenommen ist und auf den im Bereich seiner radial außenliegenden Mantelfläche ein Benutzer des Werkzeugs Kräfte aufbringen kann, wobei es sich um Kräfte
- in Richtung einer Längsachse 3-3,
- quer zu dieser,
- Torsionsmomente um die Längsachse 3-3 oder
- Biegemomente quer zu der Längsachse
handeln kann. Bei dem Werkzeug kann es sich um ein beliebiges Werkzeug handeln, insbesondere eine Säge, eine Kelle, einen Hammer, eine Zange, einen Stechbeitel, ein Hand-Gartengerät oder ein Messer.

Für einen besonderen Einsatzzweck findet der Griff Einsatz für ein Werkzeug, bei dem über den Griff Torsionsmomente um die Längsachse 3-3 übertragen werden müssen als ein Haupt- oder Nebenzweck des Werkzeugs, zum Beispiel bei einem Schraubendreher. Derartige Werkzeuge unterscheiden sich insbesondere von Stoß- oder Schlagwerkzeugen:
Bei der Bedienung eines Schlagwerkzeugs wird das Schlagwerkzeug von dem Benutzer in einer Ausholbewegung beschleunigt und mit einem Impuls versehen. Für eine derartige Beschleunigung des Schlagwerkzeugs ist die Steifigkeit eines Schlagwerkzeugs unerheblich, so dass das Schlagwerkzeug gleichermaßen für einen weichen Griff wie für einen harten Griff adäquat beschleunigt und dem zu hämmernden Objekt zugeführt werden kann. Mit dem genannten Impuls trifft das Schlagwerkzeug auf das zu schlagende Objekt, wobei der Impuls des Schlagobjekts auf das zu schlagende Objekt übertragen wird. Der auf das zu schlagende Objekt ausgeübte Impuls ist dabei davon unabhängig, ob das Schlagwerkzeug bei dem Stoß fest gehalten wird, auf das Objekt gepresst wird oder "frei zurückschwingen" kann. Demgemäß presst ein Fachmann beim Schlagen mit einem Schlagwerkzeug dieses nicht auf das zu schlagende Objekt, sondern lässt das Schlagwerkzeug für die Übertragung des Impulses auf das zu schlagende Objekt eher frei zurückschwingen. Dies bedeutet, dass für das Auftreffen die Hand des Benutzers nicht zwingend eng und steif um den Griff geschlossen werden muss, sondern auch für diese Phase ein beliebig weicher und elastischer Griff zum Einsatz kommen kann. Während und in zeitlicher Umgebung des eigentlichen Stoßes überträgt damit der Benutzer im Wesentlichen seitliche Führungskräfte über den Griff auf das Schlagwerkzeug. Um die Übertragung von Stößen auf die Hand des Benutzers, auch bei einem "fehlerhaften", festen Umschließen des Griffs, zu mindern oder zu vermeiden, schlagen die eingangs genannten Druckschriften für Schlag- oder Stoßwerkzeuge vor, dass der Griff weiche oder elastische Bestandteile aufweist, die insbesondere in Stoßrichtung, also auf der Oberseite sowie auf der Unterseite vorgesehen werden, um eine gezielte Elastizität in Stoßrichtung herbeizuführen. Damit beruhen Ausgestaltungen von Griffen für Stoß- und Schlagwerkzeuge auf der Erkenntnis, den Griff gerade in Richtung der zu übertragenden Kräfte, nämlich in Richtung des Stoßes, elastisch, gedämpft und weich auszubilden. Eine derartige Ausgestaltung für abweichende Griffe, insbesondere für Griffe, mit denen Momente um die Längsachse übertragen werden sollen, führt zu in der Praxis nicht einsetzbaren Werkzeugen. Mögliche Einsatzzwecke der Griffe mit einer Torsionsmoment-Übertragung sind beispielsweise Schraubendreher oder Schraubzwingen.

Grundsätzlich besitzt ein Griff radial innenliegend einen Schaft 2, der einen unrunden Übertragungsquerschnitt 4 oder von einem runden Querschnitt ausgehende Rippen 5 besitzen kann. Der Schaft 2 ist von einem Griffkern 6 teilweise oder vollständig ummantelt, wobei sich Teile des Übertragungsquerschnitts 4 oder der Rippen 5 des Schafts durch den Griffkern 6 radial nach außen erstrecken können. Der Griffkern 6 ist vorzugsweise im Bereich seiner Außenfläche ebenfalls unrund ausgebildet mit einem Übertragungsquerschnitt 7 oder Rippen 8. Der Griffkern 6 kann von einer Griffkernummantelung 9 teilweise oder vollständig umgeben sein, wobei sich ebenfalls Teilbereiche der Übertragungsquerschnitte 7 oder der Rippen 8 durch die Griffkernummantelung 9 erstrecken können. Weiterhin vorgesehen sein kann eine die Griffkernummantelung 9 zumindest teilweise umgebende weiche Schicht 10 (innere Schicht 28), die zumindest teilweise von einer Außenschicht 11 (äußere Schicht 27) ummantelt sein kann. Griffkernummantelung 9, weiche Schicht 10 und/oder Außenschicht 11 können Rippen, Vorsprünge, Fortsätze oder Stege (im Folgenden Rippen 12) aufweisen, mit denen die genannten Schichten 9-11 durch eine benachbarte Schicht mit einer weiteren Schicht verbunden sind. Alternativ oder zusätzlich können Rippen, Fortsätze, Vorsprünge, Stege (im Folgenden Rippen 13) vorgesehen sein, die sich lediglich teilweise in eine benachbarte Schicht erstrecken und im Bereich welcher eine radiale Erstreckung einer benachbarten Schicht verringert ist. Die Rippen 13 können dabei sowohl radial nach innen als auch radial nach außen von einer die Rippen tragenden Schicht orientiert sein.

Sämtliche vorgenannten Bestandteile eines Griffs 1 können alternativ oder kumulativ eingesetzt werden. Ebenfalls eine Zwischenordnung zusätzlicher weiterer Schichten, loser Partikel, eines Gels oder eines Fluids ist ebenfalls möglich.

Für eine weitere Ausführungsvariante ist die weiche Schicht 10 oder innere Schicht 28 teilweise oder vollständig von einer härteren Außenschicht 11 oder äußeren Schicht 27 ummantelt, wobei diese hinsichtlich der Wahl ihrer Steifigkeit und der radialen Erstreckung derart konstruktiv vorgegeben ist, dass die Außenschicht 11 durch von der Hand des Benutzers aufgebrachte Kräfte radial verformt werden kann, womit eine elastische Verformung der weichen Schicht 10 einhergeht.

Neben den genannten Bestandteilen des Griffs 1 kann der Griff 1 zusätzliche Bestandteile aufweisen wie beispielsweise ein Auge 15 oder Querloch, insbesondere im dem Funktionsteil abgewandten Endbereich des Griffs 1, wobei sich das Auge 15 quer zur Längsachse 3-3 durch den Endbereich erstreckt. Über ein Auge 15 kann das Werkzeug aufgehängt werden oder ein Hilfselement in den Griff 1 eingesteckt werden. Beispielsweise kann ein Schaft eines weiteren Schraubendrehers durch das Auge 15 durchgeführt werden kann, über den dann ein zusätzliches Betätigungsmoment auf den Griff 1 ausgeübt werden kann.

Die Bestandteile des Griffs 1 können stoffschlüssig aneinander angebunden sein. Ebenfalls denkbar ist der Einsatz eines auswechselbaren Funktionsteils mit einem Griff, in den der Schaft 2 des Funktionsteiles, insbesondere mit umgebenden Schichten, gegenüber weiteren, radial außenliegenden Bestandteilen des Griffs auswechselbar eingesetzt ist. Insbesondere im Zusammenhang mit derartigen auswechselbaren Funktionsteilen kann der Griff 1 über zusätzliche Haltevorrichtungen verfügen, s. bspw. die Patentanmeldungen mit den Anmelde-Nummern EP 05 003 219.2 und EP 05 017 193.3. Weiterer optionaler Bestandteil eines Griffes ist eine Kuppe oder Kappe im Endbereich des Griffes, über die Stöße oder Schläge auf den Griff aufbringbar sind.

Für die weiche Schicht 10 (innere Schicht 28) sind beliebige konstante oder veränderliche radiale Erstreckungen möglich, die sich aus der Differenz des radialen Abstandes vom Griffkern bis zu der Griffoberfläche abzüglich der Dicke der Schicht 11 ergibt. Die radiale Erstreckung ändert sich im axialen Verlauf über die Grifflänge und wird zum vorderen Ende des Griffes hin schließlich Null. Andererseits hängt die radiale Erstreckung von dem absoluten Durchmesser des Griffes ab. Lediglich beispielhaft kann die radiale Erstreckung zumindest in einem Teilumfangsbereich einer maximalen Erstreckung im Bereich von 3,5; 4; 6 oder 8 mm liegen, während bspw. eine entsprechende minimale Erstreckung zwischen 0,5 mm und 3 mm, insbesondere 1 mm und 2,5 mm liegt oder kleiner ist als 1,5 mm, 2 mm oder 2,5 mm. Dies gilt insbesondere für eine mit einem weicheren Material gebildete innere Schicht 28 (zweites Material 23; weiche Schicht 10) und im Bereich des maximalen Durchmessers der Mantelfläche des Griffes. Die Außenschicht 11 (erstes Material 22; äußere Schicht 27) kann hingegen eine in Umfangsrichtung konstante radiale Erstreckung im Bereich zwischen 0,5 und 4 mm oder 0,5 bis 2,5 mm aufweisen, während die radiale Erstreckung in axialer Richtung variieren kann.

In einer besonderen Ausführung kann die Dicke der äußeren Schicht 27 eine radiale Erstreckung, zumindest in einem Teilumfangsbereich, von 30 bis 100 % der radialen Erstreckung der inneren Schicht 28 haben.

Benachbarte Schichten oder Bestandteile können formschlüssig, stoffschlüssig und/oder reibschlüssig oder ein Rast- oder Sperrverbindung miteinander verbunden sein.

### II. Materialien

Ein Schaft 2 kann bspw. mit faserverstärktem Kunststoff, Metall, Stahl oder Holz gebildet sein.

Als kostengünstige, aber zuverlässige Materialien für einzelne Bestandteile oder Schichten des Griffes kommt ein harter Kunststoff für den Griffkern 6 zum Einsatz, während für die Griffkernummantelung 9 und die Außenschicht 11 (äußere Schicht 27) ein erstes weiches Material 22 sowie für die weiche Schicht 10 (innere Schicht 28) ein zweites weiches Material 23 zum Einsatz kommt, wobei die beiden weichen Materialien unterschiedliche Härte haben, nämlich die äußere Schicht 27 härter ist als die innere Schicht 28. Mögliche Materialien sind (ohne Einschränkung auf diese) ein thermoplastisches Elastomer (TPE), ein thermoplastisches Polyurethan (TPU), ein thermoplastisches Polyolefin (TPO), Polypropylen, EPDM-Kautschuk, PVC oder Styrol-Block-Copolymer Einsatz. Die genannten Materialien haben eine poröse, vorzugsweise aber eine geschlossene, nicht poröse Struktur.

Eine Härte eines eingesetzten Kunststoffes, insbesondere für eine weiche Schicht 10 oder innere Schicht 28 oder ein zweites Material 23, beträgt bspw. 10 bis 55 Shore A. Für eine härtere Schicht, beispielsweise den Griffkern 6, eine Griffkernummantelung 9 und/oder eine Außenschicht 11 (äußere Schicht 28; erstes Material 22) findet insbesondere ein Kunststoff Einsatz mit einer Härte zwischen 30 und 105 Shore A, vorzugsweise zwischen 30 bis 85 Shore A. Der Griffkern 6 wird vorzugsweise aus Hartkunststoff, zum Beispiel Polypropylen mit einer Kugeldruckhärte von 45 - 65 N/mm², hergestellt.

Ebenfalls möglich ist, dass zumindest eine Schicht einen Füllstoff aufweist. Als mögliche Füllstoffe kommen ein Granulat wie ein Korkgranulat, Korkmehl, Holzmehl oder ein faserartiger Füllstoff wie Glasfasern in Betracht. Der Gewichtsanteil des Füllstoffs am Gesamtgewicht der beteiligten Schicht oder des beteiligten Bestandteils des Griffs liegt bspw. unter 50%, insbesondere zwischen 5 und 30 %.

### III. Herstellungsverfahren

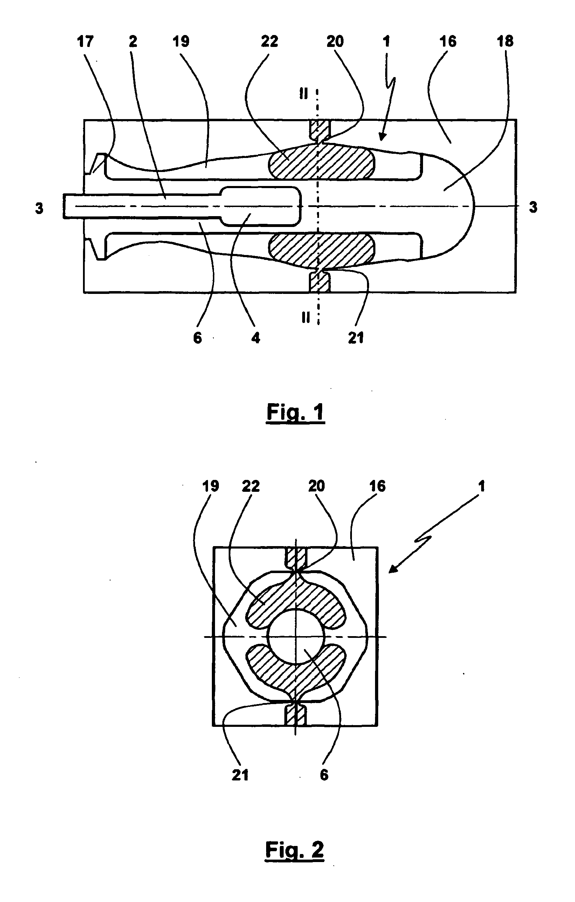

Fig. 1 bis 9 zeigen ein erfindungsgemäßes Herstellungsverfahren, welches auch als "Sandwichverfahren" oder "Intervallverfahren" bezeichnet wird, zur Herstellung zumindest von Teilschichten oder Bestandteilen des Griffs 1.

Ein mit einem ausgehärteten Griffkern 6 ummantelter Schaft 2 wird in eine Form 16 eingelegt, die in einer Mittenebene, die durch die Längsachse 3-3 verläuft, geteilt ist. Die Innenkontur der Form 16 entspricht im Wesentlichen der Form des fertigen Griffs 1. Für das in Fig. 1 bis 6 dargestellte Ausführungsbeispiel besitzt der Griffkern 6 Endbereiche 17, 18. Der Endbereich 17 ist dem Funktionsteil zugewandt und besitzt einen radial nach außen orientierten umlaufenden Bund, im Bereich dessen der Griffkern 6 die Form 16 unter radialer Abdichtung ausfüllt. Der dem Endbereich 17 gegenüberliegende Endbereich 18 bildet eine ungefähr kugelförmige Stirnseite des Griffs 1, im Bereich welcher der Endbereich 18 ebenfalls unter radialer Abdichtung an der Form 16 anliegt. Von einem zylinderförmigen Mittenbereich 26 des Griffkerns 6, ggf. mit zusätzlichen Rippen 8 o. ä., den Endbereichen 17, 18 und der Innenkontur der Form 16 ist eine in Umfangsrichtung um die Längsachse 3-3 umlaufende Kammer 19 begrenzt. Radial in die Kammer 19 münden zwei sich in Umfangsrichtung gegenüberliegende Eintrittsöffnungen oder Einspritzkanäle 20, 21 (im Folgenden "Eintrittsöffnungen"), die vorzugsweise im Bereich der maximalen radialen Erstreckung der Kammer 19 und damit des späteren Griffs 1 angeordnet sind. Über die Eintrittsöffnungen 20, 21 wird in die Form 16 und die Kammer 19 zunächst ein erstes Material 22 eingespritzt. Das Volumen des eingespritzten ersten Materials 22 ist kleiner als das der Kammer 19. Das erste Material 22 wird auf die Mantelfläche des Griffkerns 6 aufgespritzt und/oder in Richtung der die Formkavität begrenzenden Wandung umgelenkt und von dieser abgekühlt, so dass benachbart dem Griffkern 6 oder im Bereich der die Formkavität begrenzenden Wandung das erste Material 22 schneller aushärtet oder dickflüssiger wird als in anderen Teilbereichen.

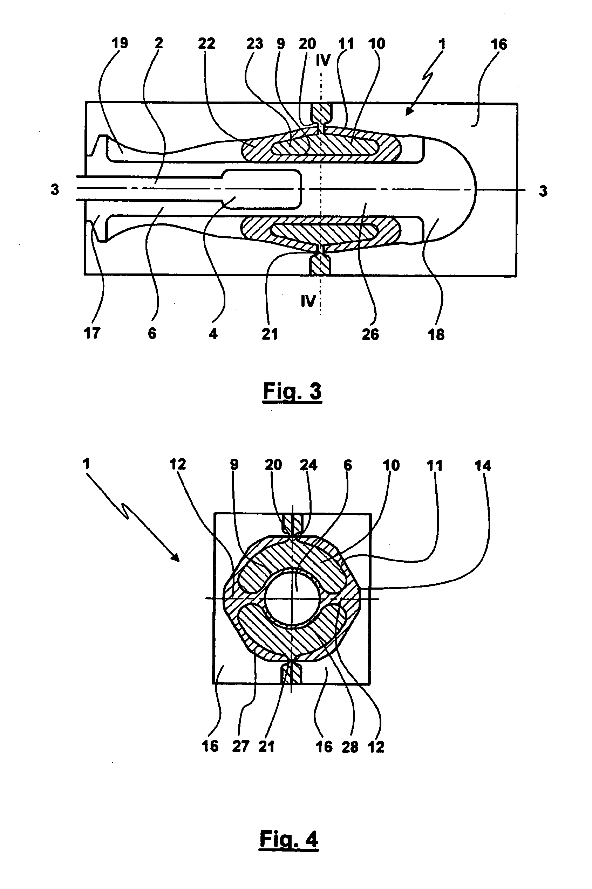

Anschließend und vor einem endgültigen Aushärten des ersten Materials 22 wird gemäß Fig. 3 und 4 über dieselben Eintrittsöffnungen 20, 21 ein zweites Material 22 in die Kammer 19 und in, unter oder durch das erste Material 22 eingespritzt. Von den Eintrittsöffnungen 20, 21 fließt das zweite Material 23 durch einen radialen Kanal 24 in das Innere des ersten Materials 22 oder unter dieses. Mit zunehmendem Einspritzen des zweiten Materials 23 wird das erste Material 22 räumlich in Richtung der Längsachse 3 und in Richtung der Endbereiche 17, 18 und radial zu der Wand der Formkavität verdrängt, wobei das zweite Material 23 bis auf den genannten Kanal sowohl radial nach außen als auch radial nach innen als auch in beide axiale Richtungen von dem ersten Material 22 ummantelt ist. Infolge des vorherigen Abkühlens des ersten Materials 22 im Kontaktbereich mit dem Griffkern 6 gelangt das zweite Material 23 nicht bis zu dem Griffkern 6. Da das erste Material in seiner Randschicht bereits etwas kühler ist als das zweite Material, wird die Randschicht nicht mehr von dem zweiten Material durchbrochen. Das zweite Material 23 drängt das erste Material 22 auch radial nach außen, so dass dieses die Außenschicht 11 oder äußere Schicht 27 bildet. Neben der beschriebenen Verdrängungsbewegung in axialer Richtung breitet sich das zweite Material 23, umgeben von dem ersten Material 22, von den beiden Eintrittsöffnungen 20, 21 um den Griffkern 6 in Umfangsrichtung aus, so dass sich entgegengerichtete Materialflüsse schließlich berühren. Da die Außenschicht des Materials 22 bereits etwas abgekühlt ist, wird sie nicht mehr von dem Material 23 durchbrochen oder verflüssigt, sondern die Außenschichten des Materials 22 der sich berührenden Materialflüsse verschmelzen und bilden dabei in ungefähr einer Ebene zu beiden Seiten des Griffkernes Wände, die als radiale Stege oder Rippen 12 des ersten Materiales 22 verbleiben und die eine sich um den Griffkern bildende Schicht aus dem ersten Material 22, einer Griffkernummantelung 9, sowie eine Außenschicht 11 oder äußere Schicht 27, ebenfalls aus dem ersten Material 22, einstückig verbinden. Diese sich auch in Längsrichtung um die Griffkernummantelung 9 bildenden Stege 12 erhöhen die Torsionssteifigkeit des Griffes und unterstützen die Übertragung eines Drehmomentes von der Außenschicht 11 auf den Griffkern 6.

Die gewählten Temperaturbedingungen, Viskositäten und Einspritzgeschwindigkeiten für das Spritzgussverfahren werden geeignet so angepasst, dass sich infolge einer derartigen Annäherung in Umfangsrichtung die Teilbereiche nicht schließen können, sondern zwischen den Teilbereichen noch in radialer Richtung durchgehende Rippen 12 oder radial nicht durchgehende Rippen 13 verbleiben.

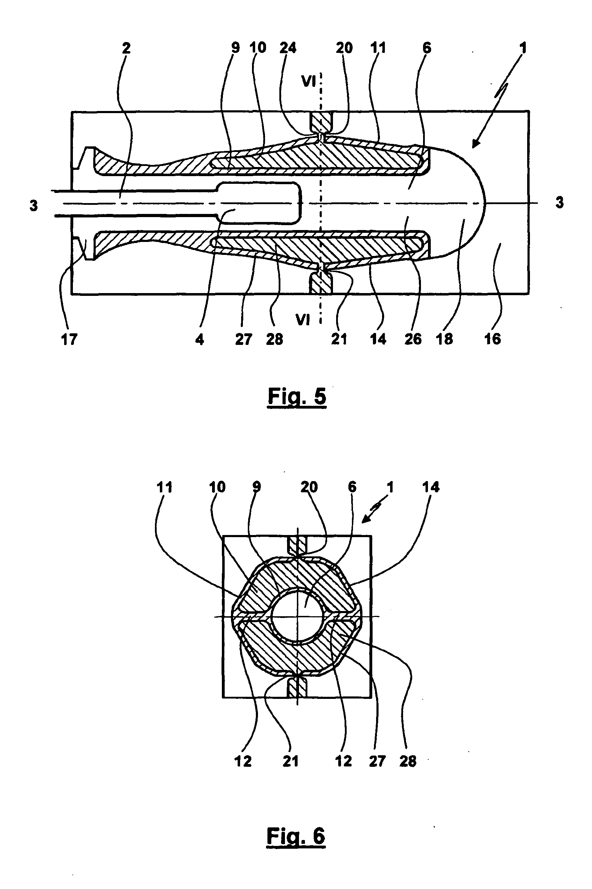

Mit Abschluss des Einspritzens des zweiten Materials 23 ist die Kammer 19 vollständig gefüllt. Der Kanal 24 kann mit Beendigung der Herstellung des Griffs 1 weiterhin mit dem zweiten Material gefüllt sein. Alternativ ist es möglich, dass am Ende des Herstellungsverfahrens nochmals eine geringe Menge des ersten Materials 22 eingespritzt wird, die den Kanal 24 und die Einspritzöffnung im Griff mit dem ersten Material 22 füllt und verschließt. Für das dargestellte Ausführungsbeispiel des Herstellungsverfahrens befinden sich die Eintrittsöffnungen 20, 21 in 12-Uhr-Position sowie in 6-Uhr-Position, s. Fig. 6, während sich die Rippen 12 in 3-Uhr-Position sowie 9-Uhr-Position erstrecken. Mit dem zweiten Material 23 ist die weiche Schicht 10 oder innere Schicht 28 gebildet. Die radiale Erstreckung der erstellten Griffkernummantelung 9 sowie der Außenschicht 11 ist geringer als die der weichen Schicht 10, und beträgt insbesondere weniger als ¹/₃, ¹/₅, ¹/₈ oder ¹/₁₀ der radialen Erstreckung der weichen Schicht 10.

Abgesehen von der Vorgabe bestimmter Dicken der Schichten 27, 28 durch Vorwahl der eingespritzten Volumina kann die Dicke der äußeren Schicht 27 auch durch die Temperatur der Wand der Formkavität (oder die Temperaturdifferenz zwischen der Wandung und dem eingespritzten Material) beeinflusst werden. Bei einer niedrigen Temperatur kühlt die Randschicht des eingespritzten ersten Materials schneller ab als bei höherer Temperatur. Infolgedessen wird die Dicke der äußeren Schicht 27 bei niedrigerer Temperatur größer als bei höherer Temperatur, bei ansonsten gleichen Parametern des Spritzvorganges.

Der Einsatz des Verfahrens erfordert Spritzgießmaschinen mit zwei Spritzgießeinheiten, die die Schmelzen der unterschiedlichen Komponenten für das erste Material 22 und das zweite Material 23 liefern und durch ein spezielles Maschinen-Steuerprogramm und besondere Ventilmechanismen an den Maschinen die schnelle, genau dosierte Abfolge der in die Form 16 eingespritzten Materialien 22, 23 bewirken. Es wurde überraschend gefunden, dass über die Anzahl und Lage der Einspritzöffnungen 20, 21 sowie die Einspritzgeschwindigkeiten und - drücke, die Schmelzetemperaturen und die Temperaturen von Form und Griffkern die Dimensionen der Griffkernummantelung 9, der weichen Schicht 10, der Außenschicht 11, der Rippen 12 und der axialen Erstreckung beeinflusst werden können.

Bei einem Griff für Schraubendreher einer Größe von 105 mm sind für ein nicht beschränkendes Ausführungsbeispiel folgende Einspritzparameter eingesetzt worden:

| | |
|---|---|
| Einspritzdruck beim Einspritzen des ersten Materials 22: | 800 bar |
| Einspritzvolumenstrom des ersten Materials 22: | 40 ccm/s |
| Einspritzdruck-Profil über vier Punkte fallend geregelt Schmelzetemperatur: | 180-210 °C in den vier Zonen |
| Einspritzdruck beim Einspritzen des zweiten Materials 23: | 1.000 bar |
| Einspritzvolumenstrom des zweiten Materials 23: | 50 ccm/s |
| Einspritzdruck-Profil über vier Punkte fallend geregelt Schmelzetemperatur: | 180-210 °C in den vier Zonen |

Die vorgenannten Parameter können je nach Form des Griffs, Formauslegung, Typ der verwendeten Kunststoffe und Maschinensystem erheblich nach oben oder unten abweichen, insbesondere um 20 % oder 10 %.

Abweichend zu der dargestellten Ausführungsform mit zwei Eintrittsöffnungen 20, 21 kann eine beliebige andere Zahl von Eintrittsöffnungen in axialer Richtung und / oder in Umfangsrichtung verteilt werden, wobei u. U. bei mehreren Eintrittsöffnungen 20, 21 in axialer Richtung auch Stege durch sich in axialer Richtung aufeinander zu bewegende Förderströme entstehen können, so dass dann die Stege auch in Umfangsrichtung umlaufend ausgebildet sein können. Für die in Umfangsrichtung umlaufenden Förderströme bilden sich die Rippen 12 insbesondere zwischen benachbarten Eintrittsöffnungen aus, so dass beispielsweise bei drei in Umfangsrichtung verteilten Eintrittsöffnungen drei Rippen 12 ausgebildet werden. Neben der symmetrischen Anordnung der Eintrittsöffnungen 20, 21 gemäß Fig. 1 bis 6 ist es ebenfalls möglich, dass die Eintrittsöffnungen unsymmetrisch angeordnet sind, wodurch sich auch unsymmetrische Rippen 12 ergeben können, die dann ein unsymmetrisches Steifigkeitsverhalten des Griffs 1 zur Folge haben. Eine Verschiebung der Lage der Rippen kann auch durch unterschiedliche Geschwindigkeiten und/oder Drücke beim Einspritzen durch die Eintrittsöffnungen erreicht werden.

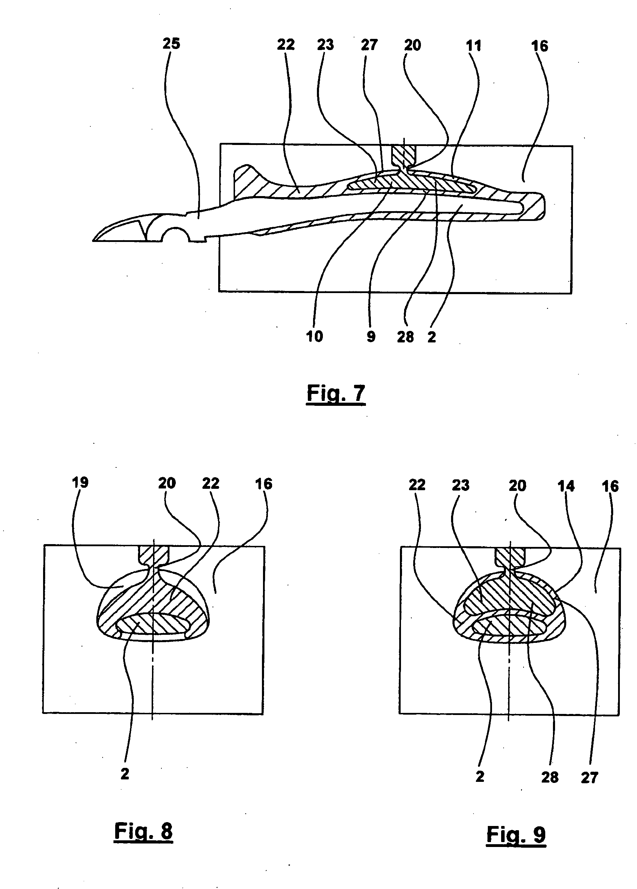

Fig. 7 bis 9 zeigen den Einsatz des zuvor erläuterten Herstellungsverfahrens für die Herstellung eines Griffs für einen Zangenschenkel 25 einer Zange 50. Für eine derartige Ausführungsform des Griffs 1 ist eine Griffkernummantelung 9 unmittelbar auf einem Schaft 2 des Zangenschenkels 25 angeordnet. Lediglich eine Eintrittsöffnung 20 ist auf der außenliegenden Seite des Zangenschenkels 25 angeordnet. Für das dargestellte Herstellungsverfahren werden die Einspritzbedingungen für die Materialien 22, 23 derart angepasst, dass sich das zweite Material 23, welches die weiche Schicht 10 (innere Schicht 28) bildet, lediglich über einen Teilumfangsbereich um den Schaft 2 erstreckt. Somit bildet das erste Material 22 innenliegend von der Mantelfläche 14 einen in erster Näherung 8-förmigen Querschnitt (mit abgerundeter Außenkontur) aus mit zwei in Richtung nach außen nebeneinander liegenden Kammern, wobei in der inneren Kammer der Schaft 2 angeordnet ist, während die außenliegende Kammer mit dem zweiten Material 23 gefüllt ist. Für den Griff 1 für einen Einsatz bei einer Zange erstreckt sich das zweite Material 23 lediglich in dem Bereich des Griffs 1, der einen vergrößerten Querschnitt besitzt für die Anlage einer Hand des Benutzers und sich ungefähr über ein Drittel bis zwei Drittel der Längserstreckung des Griffs 1 erstreckt. Hier bildet die weiche Schicht 10 (innere Schicht 28) mit dem zweiten Material 23 eine Art elastisches Kissen, während das härtere erste Material 22 eine belastbare Verbindung zum Zangenschenkel 25 ausbildet.

Für ein alternatives Herstellungsverfahren wird der Griff 1 mit zumindest zwei Bestandteilen gefertigt, wobei ein radial außenliegend in dem Griff 1 angeordneter Bestandteil mit einer inneren Ausnehmung hergestellt wird, im Bereich dessen ein Fügen des Bestandteils mit einem radial innenliegenden Bestandteil möglich ist. Über Rippen 5, 8, 12, 13 kann trotz der u. U. nicht stoffschlüssigen Verbindung eine Übertragung eines Torsionsmoments zwischen den Bestandteilen erfolgen. Ebenfalls möglich ist die Herstellung einer stoffschlüssigen Verbindung nach oder mit einem Fügen der mindestens zwei Bestandteile. Eine Sicherung der Bestandteile kann nach einem Fügen der Bestandteile auch über eine reibschlüssige oder formschlüssige Verbindung, eine elastische Rastverbindung oder eine Sperrverbindung erfolgen. Der außenliegende Bestandteil wird hierbei mit dem zuvor erläuterten Sandwichverfahren gefertigt .

### IV. Beispielhafte weitere Ausführungsformen von Griffen für Werkzeuge

Die folgenden Ausführungsformen lassen sich mit zuvor unter III. erläuterten Herstellungsverfahren herstellen, wobei die unter I aufgezählten möglichen Ausgestaltungen und Alternativen auf die folgenden Ausführungsformen übertragbar sind und für sämtliche Bestandteile und Schichten die Ausführungen zu den Materialen gemäß II. alternative Möglichkeiten für eine Ausgestaltung bieten.

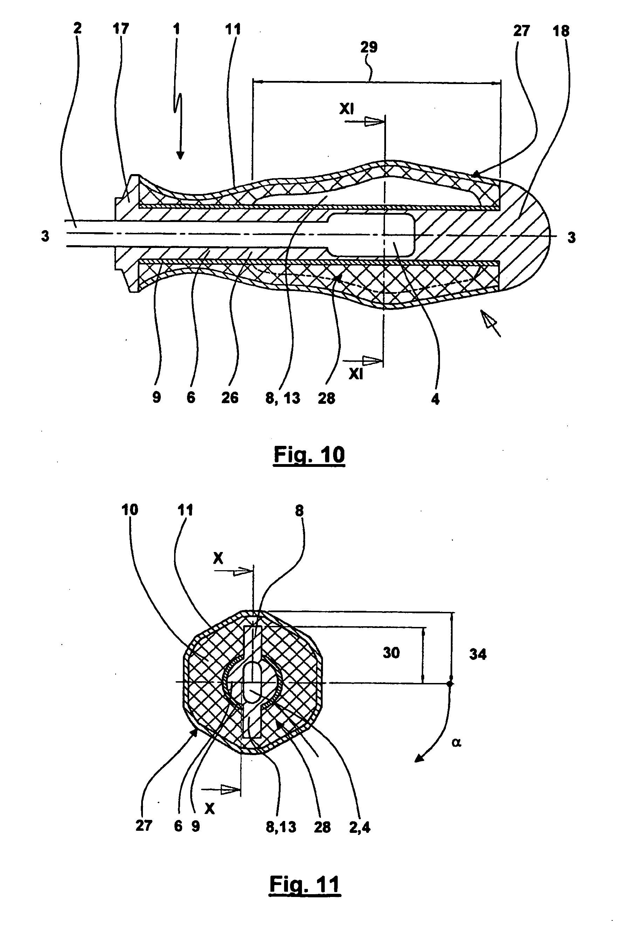

Der Griff in der in Fig. 10 und 11 dargestellten Ausführungsform ist wie folgt aufgebaut: ein Schaft 2 ist von einem Griffkern 6 ummantelt, der Endbereiche 17, 18 sowie einen Mittenbereich 26 besitzt. Der Mittenbereich 26 besitzt eine im Wesentlichen zylinderförmige Mantelfläche, die von einer Griffkernummantelung 9 ummantelt ist. Von dem Griffkern 6 erstrecken sich, einstückig von diesem ausgebildet, Rippen 8 durch die Griffkernummantelung 9 hindurch, wobei für den in Fig. 11 dargestellten Querschnitt die Rippen 8 in 12-Uhr-Position sowie 6-Uhr-Position angeordnet sind. Die Rippen 8 und die Griffkernummantelung 9 sind von einer weichen Schicht 10 in Umfangsrichtung durchgehend ummantelt, wobei die weiche Schicht 10 wiederum von einer Außenschicht 11, die in Umfangsrichtung umlaufend ausgebildet ist und die Mantelfläche 14 bildet, ummantelt ist. Die weiche Schicht 10 bildet eine innere Schicht 28 aus einem weichen Kunststoff, an der außenliegend mit der Außenschicht 11 eine äußere härtere Schicht 27 stoffschlüssig angebunden ist. Eine zusätzliche Schicht 9 aus dem ersten Material 22 und damit dem Material der äußeren Schicht 27 bildet eine Griffkernummantelung 9. An den Griffkern 6 sind Rippen 8 einstückig angesetzt. In dem in Fig. 10 dargestellten Längsschnitt ist zu erkennen, dass die Außenkontur der Rippen 8 parallel zu der Außenkontur der Mantelfläche 14 verläuft, so dass die radiale Erstreckung der inneren Schicht 28 des Griffes 1 in Richtung der Längsachse 3-3 ungefähr konstant ist. Die Rippen 8 erstrecken sich lediglich über einen axialen Teilbereich der äußeren Schicht 27, so dass in einem vorderen Bereich des Griffs 1 die äußere Schicht 27 unmittelbar stoffschlüssig an die Griffkernummantelung 9 angebunden ist. Die Rippen 8 können, wie in Fig. 11 skizziert, gegenüberliegend angeordnet sein oder abweichend in nicht dargestellter Weise in Umfangsrichtung versetzt angeordnet sein. In der dargestellten Ausführungsform haben die Rippen 8 einen rechteckigen Querschnitt, wobei diese abweichend auch eine beliebige andere Form haben können, etwa leicht nach außen zulaufend, an der Oberkante abgerundet oder in der Dicke auch geringer ausgebildet sein können.

Für die äußere Schicht 27 oder Außenschicht 11 hat sich die Verwendung eines Kunststoffes mit einer Härte von 30 bis 85 Shore A, vorzugsweise von 40 bis 60 Shore A als zweckmäßig erwiesen - für die weiche Schicht 10 oder innere Schicht 28 eine Härte von 10 bis 55 Shore A, vorzugsweise von 15 bis 30 Shore A. Es können Kunststoffe gleichen Typs oder verschiedener Typen verwendet werden, sofern diese eine gute stoffliche Verbindung miteinander eingehen. U. U. ist auch für eine gute stoffschlüssige Verbindung zwischen einer Oberkante der Rippe 8 und der äußeren Schicht 27 Sorge zu tragen.

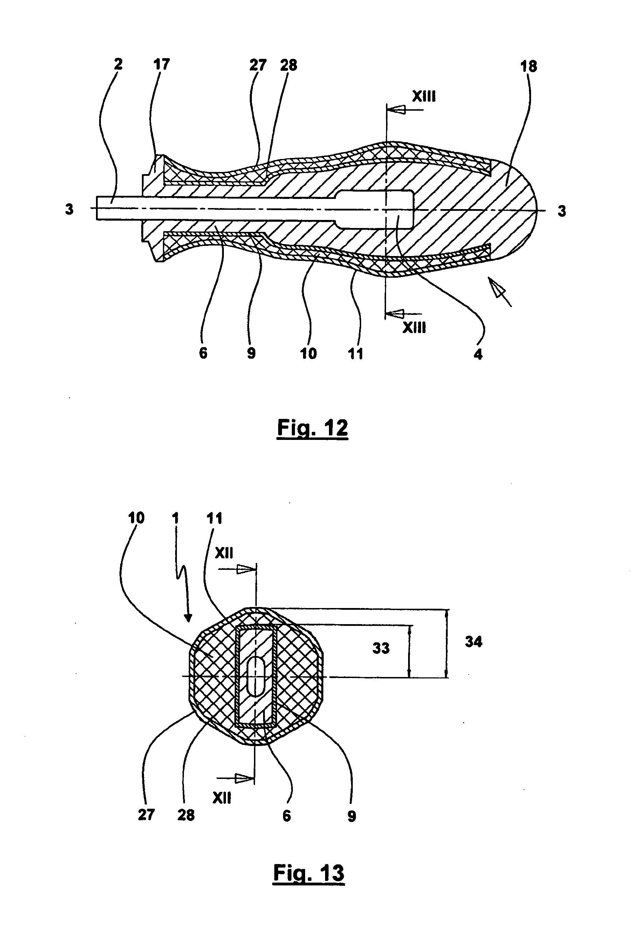

Fig. 12 und 13 zeigen weitere Ausführungsform eines Griffs 1, bei der bei ansonsten Fig. 10 und 11 entsprechender Ausgestaltung der Griffkern 6 ohne Rippen 8 ausgebildet ist. Stattdessen ist zumindest in einem Teilbereich der Griffkern 6 mit einem ungefähr rechteckförmigen Querschnitt gebildet ist, der in Umfangsrichtung vollständig von der Griffkernummantelung 9 umgeben ist. Ein derartiger rechteckiger Querschnitt des Griffkerns 6 erstreckt sich ungefähr über die Längserstreckung 29, vorzugsweise mit variierendem Verhältnis der Länge zur Breite des Rechtecks bzw. abnehmender Länge des Rechtecks.

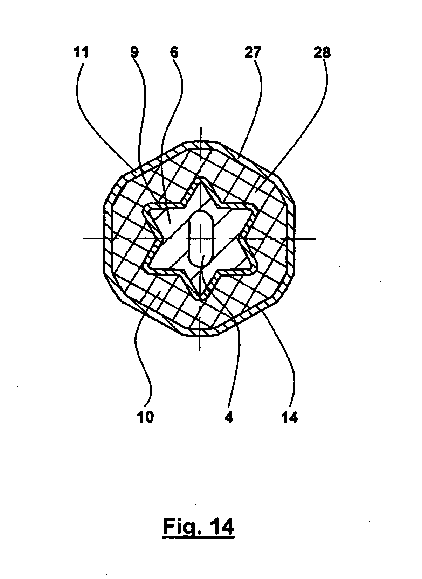

Für ein in Fig. 14 dargestelltes weiteres Ausführungsbeispiel eines Griffs 1 ist die innere Schicht 28, die mit der weichen Schicht 10 gebildet ist, sternförmig mit sechs Zacken entsprechend einer derartigen Außenkontur des Griffkerns 6 und der Griffkernummantelung 9 ausgebildet. Die innere Schicht 28 besitzt in den Positionen 12 Uhr, 2 Uhr, 4 Uhr, 6 Uhr, 8 Uhr, 10 Uhr eine maximale radiale Erstreckung.

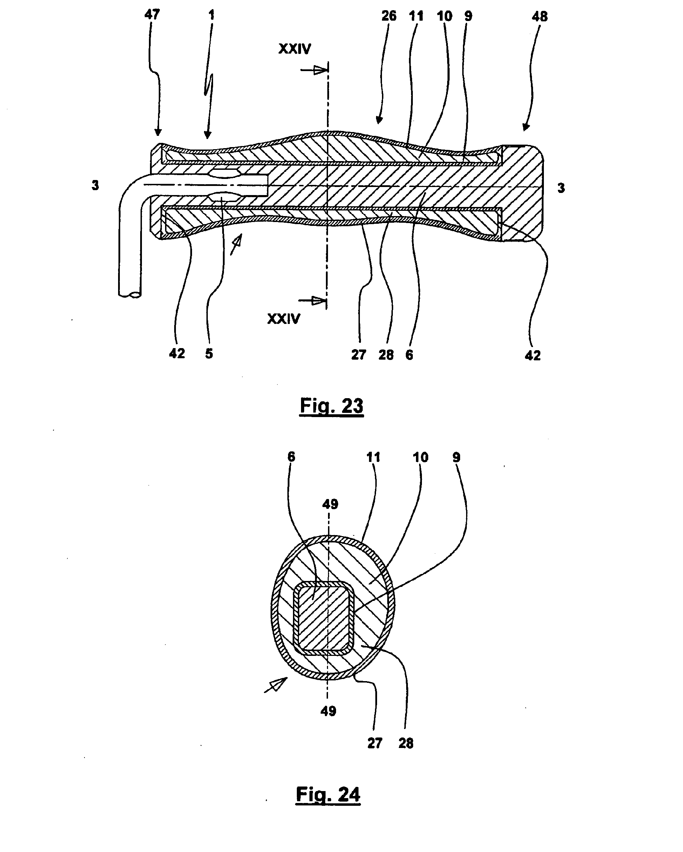

Ebenfalls denkbar ist eine Ausgestaltung einer Mantelfläche 14 und des Aufbaus des Griffs 1 auf unsymmetrische Weise, wie beispielsweise bei dem Griff für eine Kelle, s. a. Fig. 23 und 24. Bei derartigen Griffen wird der Griffkern 6 zweckmäßigerweise über seine Längserstreckung im Wesentlichen gleich gehalten. Es ist aber vorteilhaft, die Querschnitts-Kontur unrund zu gestalten, entweder in der Grundform des Querschnitts oder durch sich radial erstreckende Ansätze oder Rippen im Griffkern 6. Auch wenn mit derartigen Griffen in der Regel nicht derart hohe Torsionsmomente übertragen werden müssen wie bei einem Schraubendreher, ist eine gewisse Aussteifung des Griffs in radialer Richtung zweckmäßig.

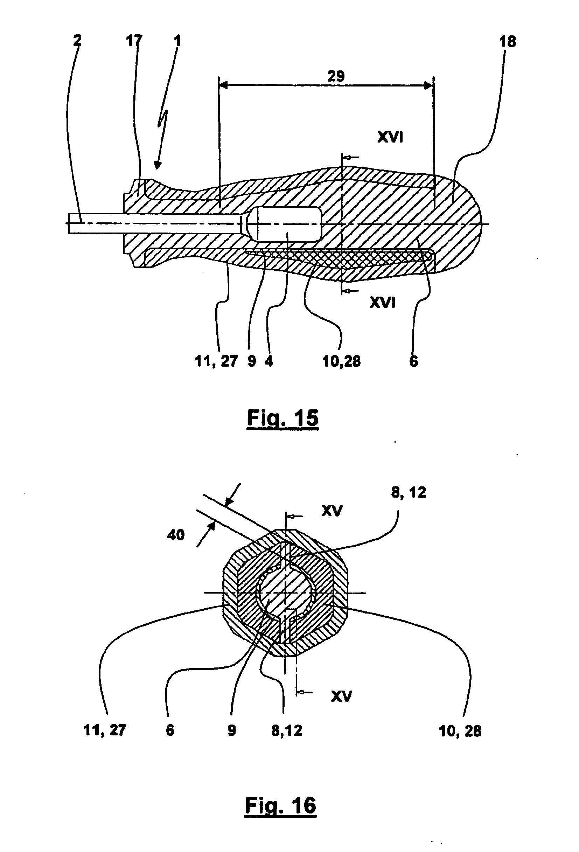

Fig. 15 und 16 zeigen ein Ausführungsbeispiel, für welches sich Rippen 8, 12 durch die innere Schicht 28 hindurch erstrecken. Die von dem Griffkern 6 ausgebildeten Rippen 8, 12 sind im Bereich ihrer Stirnseiten stoffschlüssig an die Außenschicht 11 oder äußere Schicht 27 angebunden und stellen damit eine unmittelbare und steife Verbindung zwischen Außenschicht 11 und dem ansonsten runden Querschnitt des Griffkerns 6 dar. Das Beispiel zeigt eine dickere Außenschicht 11 oder äußere Schicht 27, wie sie durch stärkere Kühlung der Wand der Formkavität erreicht wird. Insbesondere beträgt die radiale Erstreckung 41 der äußeren Schicht 27 30 % bis 100 % der radialen Erstreckung 40 der inneren Schicht 28, gemessen an der Stelle des größten Durchmessers des Griffs 1.

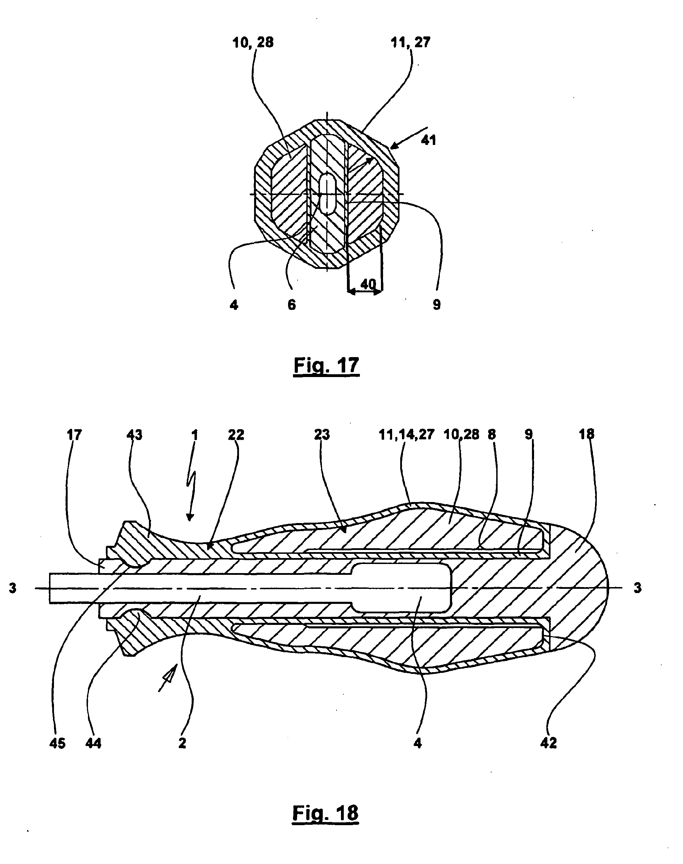

Fig. 17 zeigt eine Ausführungsform eines Griffs 1, welche im Wesentlichen der in den Fig. 15 und 16 dargestellten Ausführungsformen entspricht, allerdings in diesem Fall mit einem Griffkern 6 mit rechteckigem Übertragungsquerschnitt 7, der stoffschlüssig an die Außenschicht 11 und äußere Schicht 27 angebunden ist.

Fig. 18 zeigt ein Ausführungsbeispiel eines Griffs, bei dem ein Griffkern 6 mit Endbereichen 17, 18 ausgebildet ist, wobei der Endbereich 18 eine Kappe zur Aufbringung von Axialkräften durch eine Hand des Benutzers bildet. Der Griffkern 6 besitzt sechs gleichförmig über den Umfang verteilte Rippen 13. Für das dargestellte Ausführungsbeispiel sind die Außenschicht 11 (äußere Schicht 27) und die Griffkernummantelung 9 über einen radialen Steg 42, der für das dargestellte Ausführungsbeispiel in Umfangsrichtung umlaufend ausgebildet ist als kreisringförmiger Bund, miteinander verbunden, so dass mit der Griffkernummantelung 9, dem Steg 42 und der Außenschicht 11 im Halblängsschnitt ein liegendes, nach vorne offenes U gebildet ist. Der innenliegende Schenkel des U, welcher die Griffkernummantelung 9 bildet, ist kürzer ausgebildet als der außenliegende, die Mantelfläche 14 bildende Schenkel, der insbesondere ungefähr mit der Längserstreckung 29 ausgebildet ist. Die Griffkernummantelung 9 ist von den Rippen 8, 13 durchsetzt. Zwischen Griffkernummantelung 9 und Außenschicht 11 ist eine weiche Schicht 10 angeordnet, die eine innere Schicht 28 bildet. Der Griffkern 6 ist aus einem harten Kunststoff gebildet, der eine erste Steifigkeit definiert. Mit den Endbereichen 17 und 18 liegt während einer Fertigung des Griffs 1 der Griffkern 6 dichtend an der Wand einer Formkavität an, wenn die Griffkernummantelung 9 und die weiche Schicht 10 hergestellt werden durch Aufspritzen auf den Griffkern 6. Die Außenschicht 11 besitzt eine dritte Steifigkeit, während die weiche Schicht 10 eine zweite Steifigkeit besitzt. Die zweite und dritte Steifigkeit sind mit einem elastischen Kunststoff mit unterschiedlicher Härte gebildet, wobei der für die dritte Steifigkeit verwendete Kunststoff eine höhere Härte besitzt als der zur Bereitstellung der zweiten Steifigkeit verwendete Kunststoff. Bei Beaufschlagung des Griffs 1 mit einer Handkraft verformen sich die Außenschicht 11 und die weiche Schicht 10 räumlich und passen sich der Höhlung der auf den Griff 1 einwirkenden Hand an, so dass eine optimale Kopplung von Griff und Hand erreicht werden kann. Auf diese Weise erfolgt auch eine Adaption des Griffs 1 an unterschiedliche Hände unterschiedlicher Benutzer. Griffkern 6, Griffkernummantelung 9, weiche Schicht 10 und Außenschicht 11 sind - durch entsprechende Auswahl der verwendeten Kunststoffe - stofflich durch Verschweißen beim Spritzvorgang miteinander verbunden. Zusätzlich - insbesondere bei Griffen, mit denen ein Torsionsmoment übertragen werden muss - erfolgt ein Formschluss zwischen den Rippen 8, 13 und der Griffkernummantelung 9 und dem innenliegenden Bereich der weichen Schicht 10. Da die Griffkernummantelung 9 eine höhere Härte besitzt als die weiche Schicht 10 und mit der Oberfläche des Griffkerns 6 stoffschlüssig verbunden ist, trägt die Griffkernummantelung 9 wirkungsvoll zur Übertragung eines Torsionsmoments bei.

Eine Fertigung des Griffs 1 erfolgt derart, dass zunächst der Griffkem 6 in einer ersten Spritzgießform gefertigt wird, wobei der Schaft 2 in den Griffkern 6 eingegossen wird. In einer zweiten Spritzgießform werden die Griffkernummantelung 9, die weiche Schicht 10 und die Außenschicht 11 auf den in die Form eingelegten Griffkern 6 aufgespritzt gemäß dem Intervall-Sandwichverfahren. Zuerst wird das die Griffkernummantelung 9, den Steg 42 und die Außenschicht 11 (äußere Schicht 27) bildende erste Material 22 in die Form eingespritzt und unmittelbar danach vor einem Aushärten die die weiche Schicht 10 (innere Schicht 28) bildende Kunststoffmasse, das zweite Material 23, eingespritzt. Das zweite Material 23 verdrängt das zuerst eingespritzte, noch (teilweise) flüssige erste Material 22 an die Wandung der Formkavität bzw. an die Wandung des Griffkerns 6, wodurch die Griffkernummantelung 9, der Steg 42 und die Außenschicht 11 ausgebildet werden. Durch einen derartigen Verfahrensablauf wird erreicht, dass sich an der Oberfläche des Griffs 1 die Außenschicht 11 als dichte Schicht ausbilden kann. Die Dicke dieser Schicht kann durch den Verfahrensablauf, beispielsweise das Verhältnis und die Dosierungsmengen der Materialien 22, 23 und/oder die Parameter des Spritzgießvorgangs gesteuert werden. Die Dicke der Schicht wird in jedem Fall so eingestellt, dass eine radiale Verformbarkeit der Außenschicht 11 und der weichen Schicht 10 bei Einwirken einer Kraft durch die den Griff 1 umschließende Hand beim Arbeiten nicht gemindert wird, aber andererseits eine gute Übertragung eines eingeleiteten Torsionsmoments gewährleistet ist, wie es z. B. bei Verwendung eines derartigen Griffs für einen Schraubendreher erforderlich ist. Es wurde gefunden, dass eine Schichtdicke von ungefähr 0,5 bis 2,5 mm zweckmäßig ist für die Außenschicht 11, wobei die Dicke im Verlauf der Mantelfläche 14 variieren kann. Für die Ausbildung der Außenschicht 11 wird vorteilhafterweise eine Qualität bzw. Kunststoffart verwendet, die eine für den Anwendungszweck ausreichende Beständigkeit gegenüber Chemikalien, Fetten oder Ölen hat. Eine derartige Beständigkeit müssen die für die weiche Schicht 10 verwendeten Kunststoffarten nicht zwingend besitzen, wodurch u. U. Kosten gespart werden können. Eine Paarung der Materialien 22, 23 in Härte und Art oder Typ wird derart gewählt, dass diese zum einen eine gute stoffliche Verbindung miteinander und mit dem Griffkern 6 eingehen und zum anderen eine gewünschte Verformbarkeit gewährleistet ist.

Eine Herstellung eines derartigen Griffs 1 kann alternativ durch separate Herstellung
- eines Bestandteils einer Art Griffhülse mit dem Endbereich 43, der Griffkernummantelung 9, der weichen Schicht 10 (innere Schicht 28) und der Außenschicht 11 (äußere Schicht) sowie
- eines weiteren Bestandteils mit dem mit dem Griffkern 6 ummantelten Schaft 2
erfolgen. Hierbei wird in den erstgenannten Bestandteil eine zentrale, in Richtung der Längsachse 3-3 verlaufende Höhlung eingeformt, bspw. mit einem entsprechenden Formkern, die einen unrunden Querschnitt aufweisen kann zur Herstellung einer formschlüssigen Verbindung mit einer entsprechenden Mantelfläche des Griffkerns 6, beispielsweise zur Aufnahme von Rippen 8, 13. Alternativ kann die Höhlung einen Sechskantquerschnitt oder einen runden Querschnitt mit eingeformten, in Längsrichtung verlaufenden Taschen besitzen. Um den Formkern zur Herstellung der Höhlung bildet sich, wie zuvor beschrieben, die Griffkernummantelung 9 aus Kunststoff mit höherer Härte aus, die aus dem ersten Material 22 besteht. Der Griffkern 6 besitzt einen korrespondierenden Querschnitt, also insbesondere ebenfalls einen Sechskantquerschnitt oder einen runden Querschnitt mit radial aufgesetzten Rippen 8, 13, die in die Taschen des ersten Bestandteils eingreifen. Über die unrunden Querschnitte kann ein Torsionsmoment übertragen werden. Die Maße und Toleranzen der beiden Querschnitte sind so aufeinander abgestimmt, dass der erste Bestandteil straff passend auf den Griffkern 6 aufgeschoben werden kann. Zweckmäßigerweise können die beiden Bestandteile zusätzlich miteinander verklebt werden. Der Endbereich 43 besitzt über den Umfang verteilte Nasen 44 oder einen umlaufenden Ansatz, der in einer Rastverbindung formschlüssig in einer zugeordneten Nut 45 des Griffkerns 6 aufgenommen ist. Eine derartige Schnappverbindung mit den Nasen 44 und der Nut 45 führt zu einer (u. U. auswechselbaren) axialen Sicherung. Selbstverständlich kann eine Schnappverbindung auch auf andere Weise ausgebildet sein oder eine axiale Sicherung anderer Art vorgesehen sein.

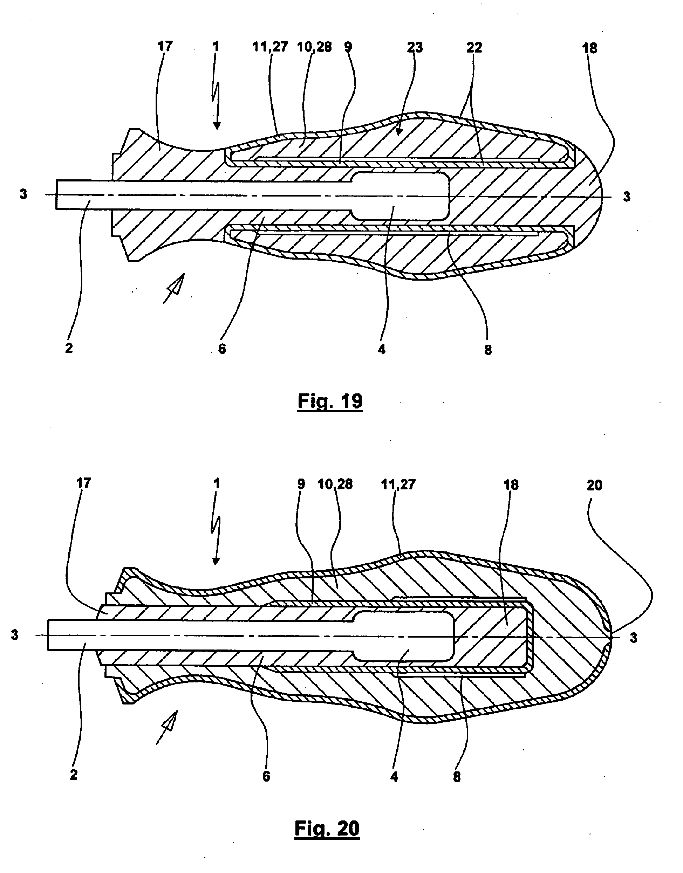

Bei einer in Fig. 19 dargestellten Ausführungsform eines Griffs 1 ist die Mantelfläche 14 mit den radial erweiterten Endbereichen 17, 18 des Griffkernes 6 gebildet. Zwischen den Endbereichen ist ein elastischer Teil des Griffs 1 angeordnet, der mit einer weichen Schicht 10 (innere Schicht 28) sowie einer im Längsschnitt geschlossenen Ummantelung der weichen Schicht 10 mit der Griffkernummantelung 9 und der Außenschicht 11 (äußere Schicht) gebildet ist. Dieses elastische Griffteil kann entweder zunächst als eigenes Spritzgießteil - ebenfalls im Sandwichverfahren - gefertigt werden und unter elastischer Aufweitung von hinten über den Endbereich 18 auf den Griffkern 6 aufgesteckt werden oder das Griffteil wird im Sandwichverfahren direkt auf den Griffkern 6 aufgespritzt, wie dieses bereits für vorangegangene Ausführungsformen beschrieben worden ist.

Für das in Fig. 20 dargestellte Ausführungsbeispiel ist in dem Griff 1 der Griffkern 6 nicht durchgehend bis zum Ende des Griffs 1 ausgebildet. Vielmehr ist der Endbereich 18 des Griffkerns 6 ebenfalls von der Griffkernummantelung 9, der weichen Schicht 10 (innere Schicht 28) und der Außenschicht 11 (äußere Schicht 27) ummantelt, so dass die Außenschicht 11 auch die stirnseitige Mantelfläche oder die Kappe bildet. Bei einem Griff gemäß diesem Ausführungsbeispiel ist es zweckmäßig, zumindest eine oder eine einzige Eintrittsöffnung 20 zentral am Ende des Griffes 1 anzuordnen.

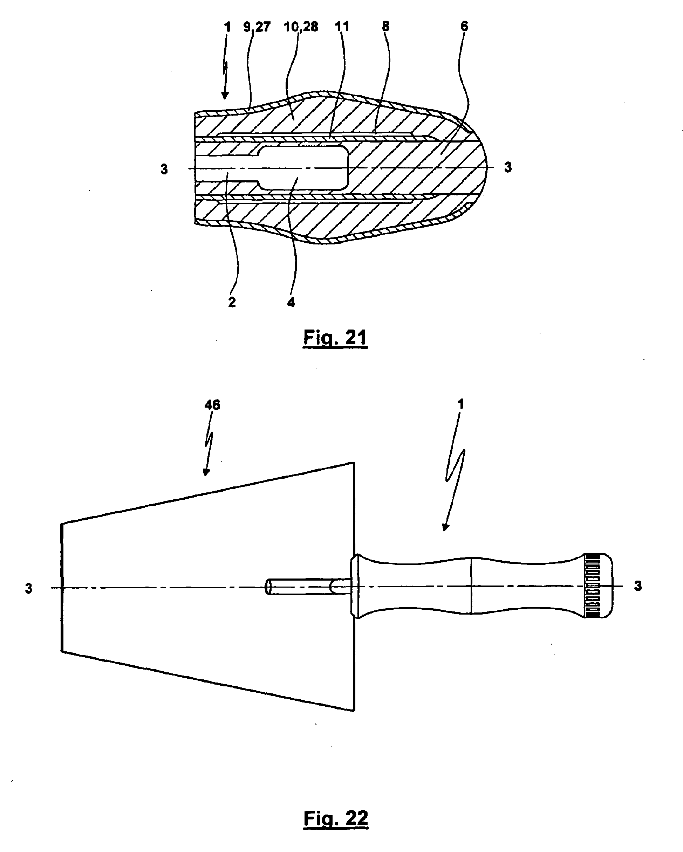

Für das in Fig. 21 dargestellte Ausführungsbeispiel ist der Griffkern 6 ohne radiale Verdickung im Endbereich 18 bis zum Endbereich des Griffs 1 durchgeführt.

Für die in den Fig. 18 bis 21 dargestellten Ausführungsbeispiele ist die weiche Schicht 10 oder innere Schicht 28 insbesondere mit einem zweiten Material 23 in Form eines Kunststoffes in geschlossener Struktur mit einer Härte von 10 bis 45 Shore A ausgebildet. Alternativ kann die weiche Schicht 10 mit einer porösen Struktur gebildet sein, deren Ausgangshärte 20 bis 80 Shore A ist. Für die Außenschicht 11 (äußere Schicht 27) und/oder die Griffkernummantelung 9 findet ein erstes Material in Form eines Kunststoffes Einsatz mit einer Härte von 30 bis 105 Shore A, insbesondere 30 bis 85, vorzugsweise 40 bis 60 Shore A. Die radiale Erstreckung der weichen Schicht 10 ist größer als die der Außenschicht 11 und/oder der Griffkernummantelung 9. Die Dicke der Griffkernummantelung 9 und/oder der Außenschicht 11 liegt zwischen 0,5 und 4 mm. Der Griffkern 6 kann ein balliges Ende des Griffs bildende Kappe aufweisen, deren Durchmesser größer ist als der Durchmesser eines Schafts oder Mittenbereichs 26 des Griffkerns 6. Alternativ kann der Griffkern 6 keine ballige Kappe aufweisen und mit dem Schaft oder Mittenbereich 26 bis zum Ende des Griffs 1 einen durchgehenden konstanten Querschnitt aufweisen. Alternativ kann der Griffkern nicht bis zum Ende des Griffs 1 durchgehend ausgebildet sein.

Die in den Fig. 22 bis 24 dargestellte Ausführungsform eines Griffs findet Einsatz für eine Kelle 46. Der Griff 1 besitzt gemäß dem in Fig. 23 dargestellten Längsschnitt einen vorderen Endbereich 47, einen Mittenbereich 26 und einen hinteren Endbereich 48. Die Endbereiche 47, 48 sind jeweils von radialen Erweiterungen des Griffkerns 6 gebildet. Der Mittenbereich 26 ist entsprechend den zuvor dargestellten Ausführungsformen mit einer Griffkernummantelung 9, einer weichen Schicht 10 (innere Schicht 28) aus dem zweiten Material 23 und einer Außenschicht 11 (äußere Schicht 27) aus dem ersten Material 22 gebildet, wobei für die dargestellte Ausführungsform Außenschicht 11 und Griffkernummantelung 9 im Übergangsbereich zu den Endbereichen 47, 48 durch Stege 42 oder jeweils eine bundartige stirnseitige Schicht miteinander stoffschlüssig verbunden sind, so dass die weiche Schicht 10 vollständig von einer Schicht aus dem härteren Material 22 ummantelt ist. Die Griffkernummantelung 9, die weiche Schicht 10 und die Außenschicht 11 sind durch Einspritzen der Materialien 22, 23 in einem Sandwichverfahren hergestellt. Aus dem in Fig. 24 dargestellten Querschnitt des Griffs 1 ist ersichtlich, dass dieser unsymmetrisch zu einer quer zur Längsachse 3-3 orientierten Querachse 49-49 ist. Natürlich kann der Griff auch eine symmetrische Form haben.

Wie die Figuren 18 bis 26 zeigen, gibt es im Inneren der Griffe 1 nicht zwingend durchgehende steg- oder rippenartige Verbindungen zwischen der Griffkernummantelung 9 und der Außenschicht 11 aus Material 22, da sich eine solche stegartige Verbindung nicht automatisch in jedem Fall beim Sandwichverfahren ergibt.

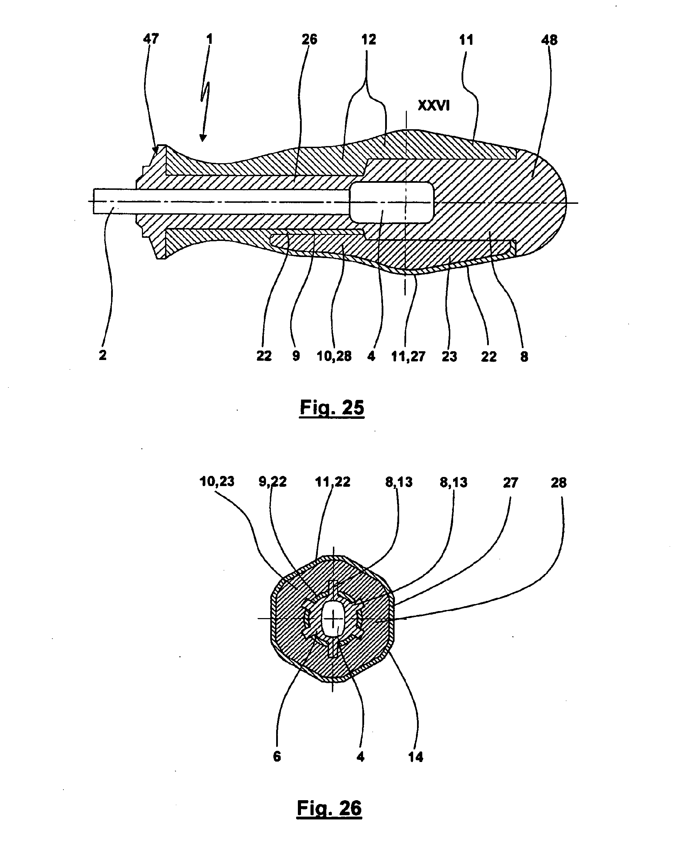

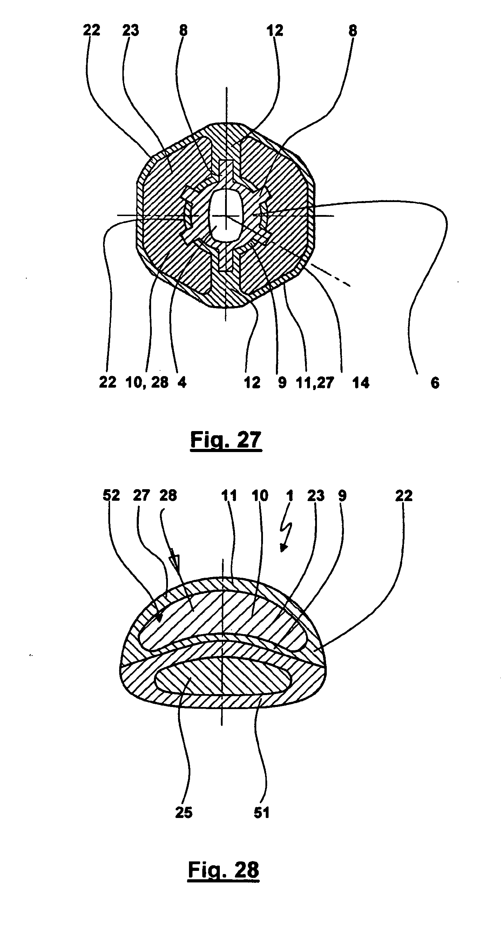

Für das in Fig. 25 und 26 dargestellte Ausführungsbeispiel sind in der Darstellung der unteren Halbebene Rippen 8, 13 des Griffkerns 6 vorgesehen, die die Griffkernummantelung 9 in beide radialen Richtungen durchsetzen und sich in einen Teilbereich der weichen Schicht 10 (innere Schicht 27) erstrecken, wie dies aus Fig. 26 ersichtlich ist. Hierbei sind sechs Rippen 8, 13 gleichmäßig in Umfangsrichtung verteilt, wobei zwei gegenüberliegende Rippen 8, 13 mit gegenüber den weiteren Rippen 8, 13 vergrößerter radialer Erstreckung ausgebildet sind. Es können aber auch alle Rippen dieselbe radiale Erstreckung haben. Im Unterschied zu dem Beispiel gemäß Fig. 10, 11 erstrecken sich die Rippen nicht weit in die Schicht 10, so dass die Torsionssteifigkeit geringer ist als bei einem Griff gemäß Fig. 10 und 11. Bei entsprechender Anlage der Form und der Einspritzkanäle sowie Steuerung des Ablaufes werden sich bei Herstellung des dargestellten Griffs 1 im Intervall - Sandwichverfahren jedoch Stege 12 zwischen dem Griffkern 6, bzw. dessen Griffkernummantetung 9, und der Außenschicht 11 ausbilden, die in axialer Richtung über die Erstreckung der Schicht 10 verlaufen, wie aus Fig.27 und der oberen Halbebene in Fig.25 ersichtlich ist.

Fig. 28 zeigt eine Ausführungsform eines Griffs 1 für einen Zangenschenkel 25, siehe auch Fig. 7, 8, 9. Ein Unterteil 51, in dem der Zangenschenkel 25 aufgenommen ist, ist mit einem Hartkunststoff ummantelt. Mit dem Unterteil 51 stoffschlüssig auf der außenliegenden Seite des Zangenschenkels 25 verbunden ist ein Oberteil 52, wobei bei dieser Verbindung das Unterteil 51 mit dem Griffkern 6 der Ausführungsbeispiele für Schraubendreher vergleichbar ist. Das Oberteil 52 ist mit einer weichen Schicht 10 oder inneren Schicht 28 gebildet, die im Querschnitt vollständig von der einer Außenschicht 11 oder äußeren Schicht sowie einer "Griffkernummantelung" 9, die ineinander übergehen, umgeben ist. Eine Herstellung des Griffes 1 , bestehend aus dem Oberteil 52 in Verbund mit dem Unterteil 51, ist sowohl als eigenes Teil zur nachträglichen Montage auf den Zangenschenkel 25 als auch durch direktes Aufspritzen auf den Zangenschenkel 25 in einem Sandwichverfahren möglich, vergleichbar mit dem Aufspritzen der Schichten 10 und 11 auf den Griffkern 6 eines Schraubendrehers.

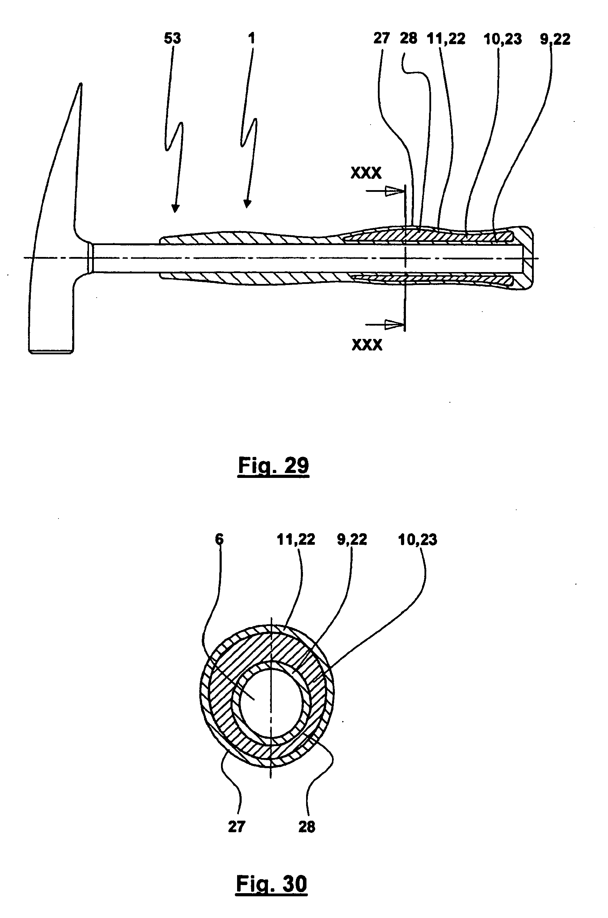

Fig. 29, 30 zeigen einen Hammer 53 mit einer Ausführungsform eines Griffs 1 im Längsschnitt und Querschnitt. Zumindest in dem Bereich des Griffes, der von dem Benutzer von der Hand umfasst wird, ist der Griff 1 mit einer Griffkernummantelung 9, einer weichen Schicht 10 (innere Schicht 27) und einer Außenschicht 11 (äußere Schicht 28) gebildet, die in einem Sandwichverfahren hergestellt sein können. Abweichend zu der dargestellten Ausführungsform kann ein Hammerstiel auch mit einem dicht in einer Kavität anliegenden Endstück ähnlich einer Kappe 18 bei einem Griff für Schraubendreher ausgestattet sein.

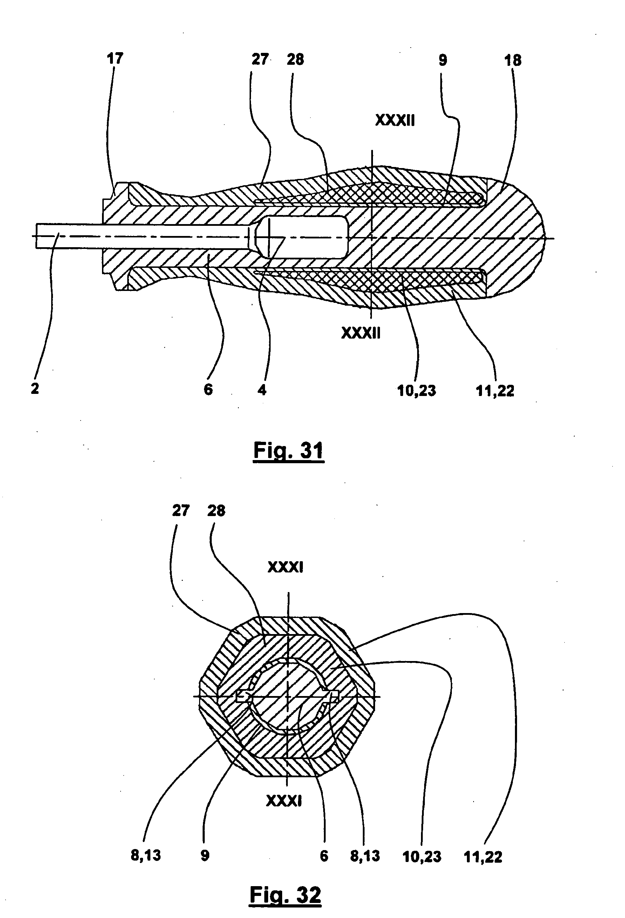

Das in den Fig. 31 und 32 dargestellte Ausführungsbeispiel ist ohne Griffkernummantelung 9 aus einem harten Kunststoff hergestellt. Stattdessen ist der Griffkern 6 mit den zugeordneten, gegenüberliegenden beiden Rippen 8, 13 unmittelbar oder mittelbar unter Zwischenschaltung der Griffkernummantelung 9 mit einer weichen Schicht 10 (innere Schicht 28) ummantelt, die für eine Herstellung in einem Sandwichverfahren mit einem zweiten Material 23 gebildet ist. Die weiche Schicht 10 ist radial außenliegend von der Außenschicht 11 (äußere Schicht 27) ummantelt, die für eine Fertigung in dem Sandwichverfahren mit dem ersten Material 22 gebildet ist. Die Dicke der Außenschicht 11 ist bei dieser Ausgestaltung durch entsprechende Dosierung der in die Formkavität eingespritzen Volumina der Materialien 22 und 23 und stärkerer Kühlung der Wand der Formkavität, vorzugsweise, je nach Griffgröße, im Bereich zwischen 2 und 4 mm eingestellt. Die Verbindung der Schichten 27, 28 erhält dadurch bereits eine gute Torsionssteifigkeit, auch wenn die Rippen 8,13 nicht weit in die weiche Schicht 10 hineinragen. Eine weitere Verbesserung der Torsionssteifigkeit wird durch Verlängerung der Rippen 8 bis ungefähr zur Innenseite der Außenschicht 11 (äußere Schicht 27) erreicht. Im Extremfall schließen die Rippen stoffschlüssig an die äußere Schicht 27 an, s. Figuren 15, 16. Eine Erhöhung der Torsionssteifigkeit kann auch dadurch herbeigeführt werden, dass der Griffkern 6 selbst eine ungefähr rechteckigen Querschnitt hat und stoffschlüssig an die Innenseite der Außenschicht 11 anschließt, s. Fig. 17.

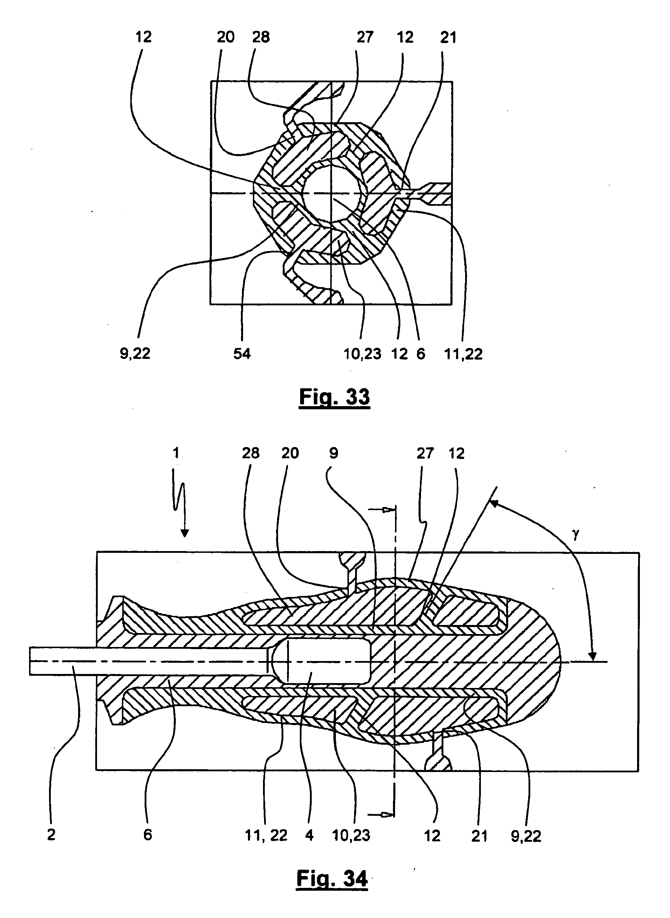

Fig. 33 zeigt eine Ausführungsform des erfindungsgemäßen Verfahrens, bei dem drei Eintrittsöffnungen 20, 21, 54 in Umfangsrichtung gleichmäßig verteilt ungefähr bei gleicher axialer Position angeordnet sind. Auf diese Weise können in Umfangsrichtung mittig zwischen den Eintrittsöffnungen 20, 21, 54 drei Rippen 12 hergestellt werden, die sich in axial und radial orientierten Ebenen erstrecken.

Fig. 34 zeigt eine Ausführungsform des erfindungsgemäßen Verfahrens, bei dem zwei Eintrittsöffnungen 20, 21 auf dem Umfang einander gegenüberliegend angeordnet sind, aber in axialer Richtung zueinander versetzt angeordnet sind. In diesem Fall stellt sich bei dem beschriebenen Sandwichverfahren eine Rippe 12 ein, die in Umfangsrichtung geschlossen oder in Form einer um die Längsachse 3-3 umlaufenden Spirale ausgebildet ist und die Schichten 9 und 11 verbindet. Sind die Eintrittsöffnungen 20, 21 abweichend zu der dargestellten Ausführungsform in Umfangsrichtung nicht zueinander versetzt, erstreckt sich die sich ergebende Rippe 12 in einer quer zur Längsachse liegenden Ebene, während sich für die dargestellte Ausführungsform ein Steigungswinkel γ der Spirale gegenüber der Längsachse 3-3 ergibt. Über die Einspritzbedingungen und die Orte der Einspritzöffnungen 20, 21 kann die der Steigungswinkel γ der Spirale vorgegeben werden.

Vorzugsweise betrifft die Erfindung nicht nur Griffe für verschieden Werkzeuge, sondern auch einen oder mehrere Griffe für Werkzeugsätze in unterschiedlichen Größen und Schaftformen. Für Griffe für Schraubendreher wird eine nicht poröse Ausführung der Schichten bevorzugt. Das erfindungsgemäße Verfahren kann zur Herstellung von Griffen mit symmetrischen Querschnittsformen, wie Schraubendrehergriffe, aber auch für Griffe mit unsymmetrischen Querschnittsformen, wie Kellengriffe oder Hämmergriffe gemäß EP 00 907 448.5 und EP 01 915 000.2 der Anmelderin angewendet werden. Für eine Ausgestaltung der Erfindung ist kennzeichnend für Griffe, die nach diesem Verfahren hergestellt werden, dass die Querschnittsfläche des Griffkernes aus hartem Kunststoff im Verhältnis zur Querschnittsfläche des fertigen Griffes verhältnismäßig klein ist, wodurch erreicht wird, dass das Volumen der elastischen, weichen Schichten verhältnismäßig groß werden kann. Hierdurch unterscheiden diese Griffe sich von den 2-Komponenten-Griffen nach dem Stand der Technik, bei denen die Querschnittsfläche des Griffkernes aus hartem Kunststoff verhältnismäßig groß ist im Vergleich zur Querschnittsfläche des Griffmantels aus einem weicheren Kunststoff.

Für die dargestellten Ausführungsformen und/oder beanspruchte Ausführungsformen kann ein Einspritzen des ersten Materials (22) und zweiten Materials (23) über dieselbe(n) Eintrittsöffnung(en) (20, 21) erfolgen. Ergänzend ist es möglich, dass das erste Material (22) und zweite Material (23) ohne Unterbrechung des Materialflusses zeitlich unmittelbar aufeinander folgend eingespritzt werden. Als erstes Material (22) kann ein thermoplastisches Elastomer, ein thermoplastisches Polyolefin, Polypropylen, EPDM-Kautschuk, PVC, Styrol-Block-Copolymer eingespritzt werden. Ebenfalls möglich ist, dass die äußere Schicht (27) einen Füllstoff aufweist. Die Mantelfläche (14) des Griffs (1) kann auch mit einer Folie gebildet sein, die stoffschlüssig an eine innen liegende Schicht angebunden ist. Schließlich kann eine äußere Schicht (27) zumindest im Bereich einer axialen Erstreckung (29) eine im Wesentlichen konstante Dicke von maximal 4 mm aufweisen.

### BEZUGSZEICHENLISTE

- 1: Griff
- 2: Schaft
- 3: Längsachse
- 4: Übertragungsquerschnitt Schaft
- 5: Rippen
- 6: Griffkern
- 7: Übertragungsquerschnitt Griffkern
- 8: Rippen Griffkern
- 9: Griffkernummantelung
- 10: weiche Schicht
- 11: Außenschicht
- 12: Rippen oder Stege
- 13: Rippen
- 14: Mantelfläche
- 15: Auge
- 16: Form, Formkavität
- 17: Endbereich
- 18: Endbereich
- 19: Kammer
- 20: Eintrittsöffnung
- 21: Eintrittsöffnung
- 22: erstes Material
- 23: zweites Material
- 24: Kanal
- 25: Zangenschenkel
- 26: Mittenbereich
- 27: äußere Schicht
- 28: innere Schicht
- 29: Längserstreckung
- 30: Erstreckung Rippe/rechteckiger Übertragungsquerschnitt
- 33: Radius Griffkern
- 34: Radius Mantelfläche

- 40: radiale Erstreckung
- 41: radiale Erstreckung
- 42: Steg, Bund
- 43: Endbereich
- 44: Nase
- 45: Nut
- 46: Kelle
- 47: vorderer Endbereich
- 48: hinterer Endbereich
- 49: Querachse
- 50: Zange
- 51: Unterteil
- 52: Oberteil
- 53: Hammer
- 54: Eintrittsöffnung

## Patentansprüche

1. Verfahren zur Herstellung eines Griffs (1) für ein Werkzeug mit einem Griffkern (6) aus einem harten Material, einer äußeren Schicht (27) aus einem weichen ersten Material (22) und einer innenliegend von der äußeren Schicht (27) und sich radial an die äußere Schichtanschließenden inneren Schicht (28) aus einem weichen zweiten Material (23); wobei Schichtdicken und Steifigkeiten der Schichten (27, 28) derart gewählt sind, dass bei einer Beaufschlagung des Griffes (1) durch die Kraft einer Hand eines Benutzers eine elastische Verformung sowohl der äußeren Schicht (27) und als auch der inneren Schicht (28) erfolgt, mit folgenden Verfahrensschritten:
a) in eine Form (16) wird zunächst ein erstes Material (22) eingespritzt und
b) anschließend an das Einspritzen des ersten Materials (22) und vor einem endgültigen Aushärten des ersten Materials (22) in die Form (16) wird ein zweites Material (23) in das noch flüssige erste Material (22) eingespritzt, wobei mit dem Einspritzen des zweiten Materials (23) erstes Material (22) räumlich verdrängt wird und zur Anlage an die Wandung der Form (16) kommt,
c) nach einem Aushärten wird
ca) die äußere Schicht (27) mit dem ersten Material (22) gebildet und
cb) die innere Schicht (28) mit dem zweiten Material (23) gebildet,
d) **dadurch gekennzeichnet, dass** das zweite Material (23) vor dem endgültigen Aushärten des ersten Materials (22) aus mindestens einer Einspritzöffnung, vorzugsweise mindestens zwei radial orientierten Einspritzöffnungen (20, 21), in die Form (16) eingespritzt wird mit einem Materialfluss mit einander entgegengerichteten Teilströmen, so dass das erste Material (22)
da) teilweise von dem zweiten Material (23) nach außen verdrängt wird und dort nach dem Aushärten zumindest Teilbereiche einer Mantelfläche (14) des Griffs (1) bildet und
db) in zumindest einem Teilumfangsbereich, in dem entgegengerichtete Teilströme aufeinandertreffen, erstes Material (22) verbleibt, wodurch in dem Teilumfangsbereich nach einem Aushärten mit dem ersten Material (22) ein Steg, Vorsprung oder eine Rippe oder Stege, Vorsprünge oder Rippen (12) gebildet ist/sind, der oder die stoffschlüssig an die äußere Schicht (27) und/oder eine Innenschicht (Griffkernummantelung 9) angebunden ist/sind.

2. Verfahren nach Anspruch 1, **dadurch gekennzeichnet, dass** die innere Schicht (28) und die äußere Schicht (27) mit einer geschlossenen Struktur hergestellt werden.

3. Verfahren nach Anspruch 1 oder 2, **dadurch gekennzeichnet, dass** das zweite Material (23) weicher ist als das erste Material (22).

4. Verfahren nach einem der Ansprüche 1 bis 3, **dadurch gekennzeichnet, dass** anschließend an das Einspritzen des ersten Materials (22) und vor einem endgültigen Aushärten des ersten Materials (22) in die Form (16) das zweite Material (23) eingespritzt wird mit einem Materialfluss derart, dass das erste Material (22)
a) teilweise von dem zweiten Material (23) nach außen verdrängt wird und dort nach dem Aushärten zumindest Teilbereiche einer Mantelfläche (14) des Griffs (1) bildet und
b) teilweise von dem zweiten Material (23) nach innen verdrängt wird und dort nach dem Aushärten zumindest Teilbereiche einer Innenschicht (Griffkernummantelung 9) bildet.

5. Verfahren nach Anspruch 1, **dadurch gekennzeichnet, dass** in dem Teilumfangsbereich, in dem entgegengerichtete Teilströme aufeinandertreffen, abgekühlte Randschichten des ersten Materials (22) nicht verdrängt oder abgeschmolzen werden, sondern sich vereinigen, wodurch in dem Teilumfangsbereich von dem ersten Material (22) nach einem Aushärten Stege, Vorsprünge oder Rippen (12) gebildet sind, die stoffschlüssig an die äußere Schicht (27) und/oder eine Innenschicht (Griffkernummantelung 9) angebunden sind.

6. Verfahren nach einem der vorhergehenden Ansprüche, **dadurch gekennzeichnet, dass** zwei in Umfangsrichtung einander gegenüberliegende Eintrittsöffnungen (20, 21) vorgesehen sind.

7. Verfahren nach einem der vorhergehenden Ansprüche, **dadurch gekennzeichnet, dass** eine einzige Eintrittsöffnung (20; 21) vorgesehen ist.

8. Verfahren nach einem der vorhergehenden Ansprüche, **dadurch gekennzeichnet, dass** vor dem Einspritzen der Materialien (22, 23) ein Griffkern (6) in die Form (16) eingelegt wird.

9. Verfahren nach Anspruch 8, **dadurch gekennzeichnet, dass** der Griffkern (6) ein Auge (15) besitzt und der Griffkern (6) derart in die Form (16) eingelegt wird und gegenüber den Eintrittsöffnungen (20, 21) orientiert wird, dass sich das Auge (15) in dem Teilumfangsbereich befindet, in dem die Stege, Vorsprünge oder Rippen (12) ausgebildet werden.

10. Verfahren nach Anspruch 8 oder 9, **dadurch gekennzeichnet, dass** der Griffkern (6) radial nach außen orientierte Rippen (8) besitzt und der Griffkern (6) derart in die Form (16) eingelegt wird, dass sich die Rippen (8) in den Teilumfangsbereich erstrecken, in dem entgegengerichtete Teilströme aufeinandertreffen und die Stege, Vorsprünge oder Rippen (12) ausgebildet werden.

11. Verfahren nach einem der vorhergehenden Ansprüche, **dadurch gekennzeichnet, dass** eine Teilungsebene der Form (16) um ungefähr 90° gegenüber dem Teilumfangsbereich versetzt liegt, in dem entgegengerichtete Teilströme aufeinandertreffen und Stege, Vorsprünge oder Rippen (12) ausgebildet werden.

12. Verfahren nach einem der Ansprüche 8 bis 11, **dadurch gekennzeichnet, dass** der Griffkern (6) zwei gegenüberliegende Endbereiche (17, 18) besitzt, die die endseitigen Teilbereiche der Mantelfläche (14) bilden, wobei die Endbereiche (17,18), Griffkern (6) oder Griffkernummantelung (9) und die Form (16) vor dem Einspritzen der Materialien (22, 23) eine Kammer (19) begrenzen.

13. Verfahren nach einem der vorhergehenden Ansprüche, **dadurch gekennzeichnet, dass** das Werkzeug eine Zange ist mit zwei Zangenschenkeln (25), die jeweils mit einem Griff (1) ummantelt sind, wobei jeweils eine Eintrittsöffnung (20) für das erste Material (22) und zweite Material (23) auf den im zusammengebauten Zustand einander abgewandten Seiten der Zangenschenkel (25) angeordnet ist oder am hinteren oder vorderen Ende des Griffs.

14. Verfahren nach einem der vorhergehenden Ansprüche, **dadurch gekennzeichnet, dass** ein erstes Materials (22) eingespritzt wird, dessen Härte zwischen 25 und 90, vorzugsweise 30 und 85 Shore A, insbesondere 30 bis 60 Shore A, liegt.

15. Verfahren nach einem der vorhergehenden Ansprüche, **dadurch gekennzeichnet, dass** ein zweites Materials (23) eingespritzt wird, dessen Härte 10 bis 40 Shore A beträgt, vorzugsweise 15 bis 35 Shore A.

16. Verfahren nach einem der vorhergehenden Ansprüche, **dadurch gekennzeichnet, dass** die Einspritzbedingungen derart vorgegeben werden, dass sich zwei Teilumfangsbereiche mit verminderter radialer Erstreckung der inneren Schicht (28) ergeben.

17. Verfahren nach einem der vorhergehenden Ansprüche, **dadurch gekennzeichnet, dass** am Griffkern (6) Rippen (8) vorgesehen werden, die sich bis zur Innenseite der äußeren Schicht (27) erstrecken.

18. Verfahren nach einem der Ansprüche 1 bis 16, **dadurch gekennzeichnet, dass** ein Griffkern (6) mit einer im Wesentlichen rechteckigen Querschnittsform eingesetzt wird, deren längere Seite sich bis auf einen geringen Abstand zu der äußeren Schicht (27) erstreckt.

19. Verfahren nach einem der vorhergehenden Ansprüche, **dadurch gekennzeichnet, dass** Eintrittsöffnungen (20, 21) für die Materialien (22, 23) in axialer Richtung versetzt zueinander angeordnet sind.

20. Griff für ein Werkzeug, insbesondere einen Schraubendreher, mit den Merkmalen und hergestellt mit einem Verfahren nach einem der Ansprüche 1 bis 12 oder 14 bis 19.

21. Griff nach Anspruch 20, **dadurch gekennzeichnet, dass** eine äußere Schicht (27) eine Dicke zwischen 0,5 und 4 mm aufweist.

22. Griff nach Anspruch 20 oder 21, **dadurch gekennzeichnet, dass** die radiale Erstreckung der inneren Schicht (28) zumindest an der Stelle des größten Durchmessers des Griffs größer ist als die radiale Erstreckung der äußeren Schicht (27).

23. Griff nach Anspruch 20, 21 oder 22, **dadurch gekennzeichnet, dass** ein Verhältnis vom größten Durchmesser (D = 2.0 x Radius (34)) des Griffs (1) zum Durchmesser (d = 2.0 x Radius (33)) eines Griffkerns, zumindest an derselben Stelle größer ist als 1,5, insbesondere größer als 2.

## Claims

1. Method for producing a handle (1) for a tool comprising a core (6) made of a hard material, an outer layer (27) made of a soft first material (22) and an inner layer (28) made of a soft second material (23) located inside from the outer layer (27) and radially adjacent to the outer layer (27), wherein the thicknesses and the stiffnesses of the layers (27, 28) are chosen such that a load acting upon the handle (1) caused by the force of the hand of a user causes an elastic deformation both of the outer layer (27) and the inner layer (28), the method comprising the following steps:
a) at first a first material (22) is injected into a mould (16) and
b) subsequent to the injection of the first material (22) and before the first material (22) has completely cured in the mould (16) the second material (23) is injected into the still fluid first material (22), wherein during the injection of the second material (23) first material (22) is displaced or squeezed in space and with the injection of the second material (23) first material (22) comes into contact with a wall of the mould (16),
c) after the curing process
ca) the outer layer (27) is built with the first material (22) and
cb) the inner layer (28) is built with the second material (23)
d) wherein the second material (23) prior to the complete curing process of the first material (22) is injected into the mould (16) from at least one injection opening, preferably from at least two injection openings (20, 21) having a radial orientation, with a flow of material with partial flows having opposite orientations such that the first material (22)
da) is partially displaced or squeezed by the second material (23) in outer direction and there the first material (22) after the curing process builds at least partial regions of the outer surface (14) of the handle (1) and
db) in at least a partial circumferential region where opposing partial flows meet first material (22) remains so that in this partial circumferential region after the curing process a web, protrusion, rip or webs, protrusions or rips (12) is/are built wherein the at least one web, protrusion or rip is bonded with the outer layer (27) and/or an inner layer (handle core cover 9).

2. Method of claim 1, wherein the inner layer (28) and the outer layer (27) are produced with a closed or non-porous structure.

3. Method of claim 1 or 2, wherein the second material (23) is softer than the first material (22).

4. Method of one of claims 1 to 3, wherein subsequent to the injection of the first material (22) and prior to the completion of the curing process of the first material (22) the second material (23) is injected into the mould with a flow of material such that the first material (22)
a) is partially displaced or squeezed by the second material (23) in outer direction where the first material (22) after the curing process builds at least partial regions of the outer surface (14) of the handle (1) and
b) is at least partially displaced or squeezed by the second material (23) in inner direction where after the curing process the first material (22) builds at least partial regions of an inner layer (handle core cover 9).

5. Method of claim 1, wherein in the partial circumferential region where opposing partial flows meet cooled boundary layers of the first material (22) are not displaced, squeezed or melted but fuse such that in the partial circumferential region the first material (22) after the curing process builds webs, protrusions or rips (12) bonded with the outer layer (27) and/or an inner layer (handle core cover 9).

6. Method of one of claims 1 to 5, wherein two entry or injection openings (20, 21) are provided with locations opposite from each other in circumferential direction.

7. Method of one of claims 1 to 6, wherein one single entry or injection opening (20; 21) is provided.

8. Method of one of claims 1 to 7, wherein prior to the injection of the materials (22, 23) a core (6) of the handle is inserted into the mould (16).

9. Method of claim 8, wherein the core (6) of the handle comprises an eye (15) and the core (6) of the handle is inserted into the mould (16) such that and has an orientation with respect to the entry or injection openings (20, 21) such that the eye (15) is located in the partial circumferential region where the webs, protrusions or rips (12) are built.

10. Method of claim 8 or 9, wherein the core (6) of the handle comprises rips (8) having a radial orientation in outer direction and the core (6) of the handle is inserted into the mould (16) such that the rips (8) extend into the partial circumferential region where the opposing partial flows meet and the rips, protrusions or webs (12) are built.

11. Method of one of claims 1 to 10, wherein a divisional plane of the mould (16) has an orientation offset by approximately 90° from the partial circumferential region where the opposing partial flows meet and where the webs, protrusions or rips (12)are built.

12. Method of one of claims 8 to 11, wherein the core (6) of the handle comprises two opposing end regions (17, 18) building partial regions of the outer surface (14) located at the ends of the outer surface wherein the end regions (17, 18), the core (6) of the handle or the handle core cover (9) and the mould (16) limit a chamber (19) prior to the injection of the materials (22, 23).

13. Method of one of claims 1 to 12, wherein the tool is built with pliers having two legs (25) each covered by a handle (1) wherein entry or injection openings (20) for the first material (22) and the second material (23) are respectively located on sides facing away from each other of the legs (25) in the assembled state or at the front or rear end of the handle.

14. Method of one of claims 1 to 13, wherein a first material (22) is injected having a hardness between 20 and 90, in particular between 30 and 85 Shore A or between 30 and 60 Shore A.

15. Method of one of claims 1 to 14, wherein a second material (23) is injected having a hardness 10 to 40 Shore A, in particular 15 to 35 Shore A.

16. Method of one of claims 1 to 15, wherein the conditions for injecting are chosen such that two partial circumferential regions result having a reduced radial extension of the inner layer (28).

17. Method of one of claims 1 to 16, wherein rips (8) are provided at the core (6) of the handle, wherein the rips (8) extend to the inner side of the outer layer (27).

18. Method of one of claims 1 to 16, wherein a core (6) of the handle is used having a substantially rectangular cross section, wherein the longer side extends to the outer layer (27) up to a small remaining distance from the outer layer (27).

19. Method of one of claims 1 to 18, wherein the entry or injection openings (20, 21) for the materials (22, 23) are offset from each other in axial direction.

20. Handle for a tool, in particular a screw driver, comprising the features and being produced with a method according to one of claims 1 to 12 or 14 to 19.

21. Handle of claim 20, wherein an outer layer (27) comprises a thickness between 0,5 and 4 mm.

22. Handle of claim 20 or 21, wherein the radial extension of the inner layer (28) is at least at the place of the largest diameter of the handle larger than the radial extension of the outer layer (27).

23. Handle of claim 20, 21 or 22, wherein the relation of the largest diameter (D = 2.0 x Radius (34)) of the handle (1) to the diameter (d = 2.0 x Radius (33)) of a core of the handle is at least at the same location larger than 1.5, in particular larger than 2.

## Revendications

1. Procédé pour la réalisation d'un manche (1) pour un outil, avec un noyau de manche (6) en matériau dur, une couche extérieure (27) réalisée dans un premier matériau souple (22) et une couche intérieure (28) radialement adjacente à la couche extérieure (27), laquelle est située à l'intérieur à partir de la couche extérieure (27) et est réalisée dans un deuxième matériau souple (23), l'épaisseur et la rigidité des couches (27, 28) étant choisies de telle sorte que lorsque le manche (1) est sollicité par la force d'une main d'un utilisateur, il se produit une déformation élastique tant de la couche extérieure (27) que de la couche intérieure (28), comportant les étapes suivantes :
a) un premier matériau (22) est injecté d'abord dans un moule (16), et
b) à la suite de l'injection du premier matériau (22) et avant le durcissement définitif du premier matériau (22), un deuxième matériau (23) est injecté dans le moule (16) dans le premier matériau (22) encore liquide, sachant que, sous l'effet de l'injection du deuxième matériau (23), le premier matériau (22) est repoussé dans l'espace et vient en appui contre la paroi du moule (16),
c) à la suite d'un durcissement
ca) la couche extérieure (27) est formée avec le premier matériau (22) et
cb) la couche intérieure (28) est formée avec le deuxième matériau (23),
d) **caractérisé en ce que**, avant le durcissement définitif du premier matériau (22), le deuxième matériau (23) est injecté dans le moule (16) à partir d'au moins une ouverture d'injection, de préférence au moins deux ouvertures d'injection (20, 21) orientées radialement, avec un flux de matière formé de flux partiels opposés entre eux, de telle sorte que le premier matériau (22)
da) est repoussé partiellement par le deuxième matériau (23) vers l'extérieur et y forme, après le durcissement, au moins des zones partielles d'une surface d'enveloppe (14) du manche (1), et
db) le premier matériau (22) subsiste au moins dans une zone périphérique partielle, dans laquelle se rencontrent des flux partiels opposés, moyennant quoi, après un durcissement, il se forme avec le premier matériau (22) dans la zone périphérique partielle une arête, une saillie ou une nervure ou des arêtes, des saillies ou des nervures (12), laquelle ou lesquelles est/sont reliée(s) par liaison de matière contre la couche extérieure (27) et/ou une couche interne (enveloppe 9 du noyau du manche).

2. Procédé selon la revendication 1, **caractérisé en ce que** la couche intérieure (28) et la couche extérieure (27) sont réalisées avec une structure fermée.

3. Procédé selon la revendication 1 ou 2, **caractérisé en ce que** le deuxième matériau (23) est plus souple que le premier matériau (22).

4. Procédé selon l'une quelconque des revendications 1 à 3, **caractérisé en ce que**, à la suite de l'injection du premier matériau (22) et avant le durcissement définitif du premier matériau (22), le deuxième matériau (23) est injecté dans le moule (16) avec un flux de matière tel que le premier matériau (22)
a) est repoussé partiellement par le deuxième matériau (23) vers l'extérieur et, après le durcissement, y forme au moins des zones partielles d'une surface d'enveloppe (14) du manche (1), et
b) est repoussé partiellement par le deuxième matériau (23) vers l'intérieur et, après le durcissement, y forme au moins des zones partielles d'une couche interne (enveloppe 9 du noyau du manche).

5. Procédé selon la revendication 1, **caractérisé en ce que** dans la zone périphérique partielle, dans laquelle se rencontrent des flux partiels opposés, des couches de bordure refroidies du premier matériau (22) ne sont pas repoussées ou enlevées par fusion, mais fusionnent, moyennant quoi, après un durcissement, il se forme avec le premier matériau (22) dans la zone périphérique partielle une arête, une saillie ou une nervure ou des arêtes, des saillies ou des nervures (12), laquelle ou lesquelles est/sont reliée(s) par liaison de matière contre la couche extérieure (27) et/ou une couche interne (enveloppe 9 du noyau du manche).

6. Procédé selon l'une quelconque des revendications précédentes, **caractérisé en ce qu'**il est prévu deux ouvertures d'injection (20, 21) opposées l'une à l'autre dans la direction circonférentielle.

7. Procédé selon l'une quelconque des revendications précédentes, **caractérisé en ce qu'**il est prévu une seule ouverture d'injection (20 ; 21).

8. Procédé selon l'une quelconque des revendications précédentes, **caractérisé en ce qu'**un noyau de manche (6) est posé dans le moule (16) avant l'injection des matériaux (22, 23).

9. Procédé selon la revendication 8, **caractérisé en ce que** le noyau de manche (6) comporte un oeillet (15), et le noyau de manche (6) est posé dans le moule (16) et est orienté par rapport aux ouvertures d'injection (20, 21), de telle sorte que l'oeillet (15) se situe dans la zone périphérique partielle, dans laquelle sont formées les arêtes, les saillies ou les nervures (12).

10. Procédé selon la revendication 8 ou 9, **caractérisé en ce que** le noyau de manche (6) comporte des nervures (8) orientées radialement vers l'extérieur, et le noyau de manche (6) est posé dans le moule (16) de telle sorte que les nervures (8) s'étendent dans la zone périphérique partielle, dans laquelle se rencontrent les flux partiels opposés et sont formées les arêtes, saillies ou nervures (12).

11. Procédé selon l'une quelconque des revendications précédentes, **caractérisé en ce qu'**un plan de séparation du moule (16) est situé en étant décalé d'environ 90° par rapport à la zone périphérique partielle, dans laquelle se rencontrent les flux partiels opposés et sont formées les arêtes, saillies ou nervures (12).

12. Procédé selon l'une quelconque des revendications 8 à 11, **caractérisé en ce que** le noyau de manche (6) comporte deux zones d'extrémité (17, 18) opposées qui forment les zones partielles d'extrémité de la surface d'enveloppe (14), sachant que les zones d'extrémité (17, 18), le noyau de manche (6) ou l'enveloppe (9) du noyau du manche et le moule (16) avant l'injection des matériaux (22, 23) délimitent une chambre (19).

13. Procédé selon l'une quelconque des revendications précédentes, **caractérisé en ce que** l'outil est une pince avec deux branches (25), qui sont entourées chacune d'un manche (1), une ouverture d'injection (20) pour le premier matériau (22) et le deuxième matériau (23) étant disposée sur chacune des faces des branches (25), orientées l'une vers l'autre dans la position montée, ou au niveau de l'extrémité arrière ou avant du manche.

14. Procédé selon l'une quelconque des revendications précédentes, **caractérisé en ce que** l'on injecte un premier matériau (22) dont la dureté se situe entre 25 et 90 Shore A, de préférence 30 et 85 Shore A, en particulier 30 à 60 Shore A.

15. Procédé selon l'une quelconque des revendications précédentes, **caractérisé en ce que** l'on injecte un deuxième matériau (23) dont la dureté est de l'ordre de 10 à 40 Shore A, de préférence de 15 à 35 Shore A.

16. Procédé selon l'une quelconque des revendications précédentes, **caractérisé en ce que** les conditions d'injection sont définies de telle sorte qu'il se forme deux zones périphériques partielles avec une extension radiale réduite de la couche intérieure (28).

17. Procédé selon l'une quelconque des revendications précédentes, **caractérisé en ce que** sur le noyau de manche (6) sont prévues des nervures (8) qui s'étendent jusqu'à la face intérieure de la couche extérieure (27).

18. Procédé selon l'une quelconque des revendications 1 à 16, **caractérisé en ce que** l'on insère un noyau de manche (6) avec une section de forme sensiblement rectangulaire, dont le côté plus long s'étend jusqu'à une faible distance de la couche extérieure (27).

19. Procédé selon l'une quelconque des revendications précédentes, **caractérisé en ce que** des ouvertures d'injection (20, 21) pour les matériaux (22, 23) sont disposées en étant décalées dans la direction axiale l'une par rapport à l'autre.

20. Manche pour un outil, en particulier un tournevis, comportant les caractéristiques et réalisé avec un procédé selon l'une des revendications 1 à 12 ou 14 à 19.

21. Manche selon la revendication 20, **caractérisé en ce qu'**une couche extérieure (27) a une épaisseur entre 0,5 et 4 mm.

22. Manche selon la revendication 20 ou 21, **caractérisé en ce que** l'extension radiale de la couche intérieure (28), au moins au niveau de l'emplacement du plus grand diamètre du manche, est supérieure à l'extension radiale de la couche extérieure (27).

23. Manche selon la revendication 20, 21 ou 22, **caractérisé en ce qu'**au moins au même emplacement, un rapport entre le plus grand diamètre (D = 2.0 x rayon (34)) du manche (1) et le diamètre (d = 2.0 x rayon (33)) d'un noyau de manche est supérieur à 1,5, en particulier est supérieur à 2.
